# EUROPEAN PATENT SPECIFICATION

(11) **EP 4 064 741 B1**
(45) Date of publication and mention of the grant of the patent: **18.06.2025**
(21) Application number: 21190492.5
(22) Date of filing: 10.08.2021
(51) Int. Cl.: H04W 4/80, H04W 76/10, G06F 3/12, H04W 88/06, H04W 8/00

(54) **INFORMATION PROCESSING APPARATUS, INFORMATION PROCESSING SYSTEM, AND INFORMATION PROCESSING COMPUTER PROGRAM**
INFORMATIONSVERARBEITUNGSVORRICHTUNG, -SYSTEM UND -COMPUTERPROGRAMM
APPAREIL, SYSTÈME ET PROGRAMME INFORMATIQUE DE TRAITEMENT D'INFORMATIONS

(30) Priority: 27.03.2021 JP 2021054433
(43) Date of publication of application: 28.09.2022
(73) Proprietor: Fujifilm Business Innovation Corp., Tokyo 107-0052 (JP)
(72) Inventor: KOMATSUBARA, Keisuke, Kanagawa, 220-8668 (JP)
(74) Representative: Meissner Bolte Partnerschaft mbB

(56) References cited:
- JP-A- 2019 176 420
- US-A1- 2014 085 676
- US-A1- 2015 092 601
- US-A1- 2019 014 609

## Description

### Background

### 1. Technical Field

The present invention relates to an information processing apparatus, an information processing system, and an information processing computer program.

### 2. Related Art

An object of JP-A-2016-178385 is to provide a communication system that appropriately performs handover, and discloses a system in which a terminal apparatus and an information processing apparatus can communicate with each other through first wireless communication or second wireless communication whose communication range is wider than that of the first wireless communication. The information processing apparatus receives, from the terminal apparatus through the first wireless communication, a request for connection information used for connection to the information processing apparatus through the second wireless communication. The information processing apparatus transmits the connection information to the terminal apparatus through the first wireless communication when it is determined that a detection unit configured to detect presence of an object in the vicinity of the information processing apparatus has detected the presence of the object in the vicinity of the information processing apparatus.

US 2015/092601 A1, JP 2019 176420 A, US 2019/014609 A1 and US 2014/085676 A1 disclose methods and apparatus for establishing a connection between information processing apparatus and a terminal via exchange of signalling via a first communication protocol and a second communication protocol.

### SUMMARY

There may be a case where wireless communication is established between an information processing apparatus and a terminal apparatus B that is located farther from the information processing apparatus than a terminal apparatus A even though the wireless communication is desired to be performed between the information processing apparatus and the terminal apparatus A closest to the information processing apparatus or between the information processing apparatus and the terminal apparatus A that is carried by a user in the vicinity of the information processing apparatus so as to use the information processing apparatus. Therefore, an object of the present invention is to provide an information processing apparatus and an information processing program that can reduce the wireless communication performed between the information processing apparatus and the terminal apparatus B other than the terminal apparatus A that is closest to the information processing apparatus or the terminal apparatus A carried by the user in the vicinity of the information processing apparatus so as to use the information processing apparatus.

The invention is set out in the appended set of claims. Reference is also made in the following to other embodiments corresponding to examples deemed useful to understand the invention, even if they do not fall within the scope of the claims.

According to an aspect of the present disclosure, there is provided an information processing apparatus including: a memory; and a processor, wherein the memory stores identification information of the information processing apparatus, and the processor is configured to perform control so as to transmit the identification information to a terminal apparatus via a first communication tool that is wireless proximity communication, detect communication from the terminal apparatus, and, in a case where the identification information of the information processing apparatus is included in the detected communication, request connection to the terminal apparatus that is a transmission source of the detected communication via a second communication tool, and establish the connection with the terminal apparatus (A first aspect of the present invention).

According to a second aspect of the present invention, in the information processing apparatus according to the first aspect, the processor is configured to detect the communication from the terminal apparatus, and, in a case where the identification information of the information processing apparatus is not included in the detected communication, performs control such that the request for the connection with the terminal apparatus is not made.

According to a third aspect of the present invention, in the information processing apparatus according to the first aspect, the processor is configured to, in a case where communication including the identification information of the information processing apparatus from another terminal apparatus is detected within a predetermined period after the connection is established, perform control such that a request for connection with the another terminal apparatus is not made.

According to a fourth aspect of the present invention, in the information processing apparatus according to the third aspect, the processor is configured to, in a case where communication with the terminal apparatus with which the connection has been established becomes disabled, perform control to permit the connection to the another terminal apparatus via the second communication tool.

According to a fifth aspect of the present invention, in the information processing apparatus according to the third aspect, the information processing apparatus is an image processing apparatus, and the processor is configured to, in a case where the terminal apparatus uses a reading function of the information processing apparatus, perform control such that the connection with the another terminal apparatus is not performed.

According to a sixth aspect of the present invention, in the information processing apparatus according to the first aspect, the processor is configured to, in a case where communication including the identification information of the information processing apparatus from another terminal apparatus is detected within a predetermined period after the connection is established, perform connection also to the another terminal apparatus via the second communication tool.

According to a seventh aspect of the present invention, in the information processing apparatus according to the sixth aspect, the information processing apparatus is an image processing apparatus, and the processor is configured to, in a case where the terminal apparatus and the another terminal apparatus use a printing function of the information processing apparatus, enable connection also to the another terminal apparatus via the second communication tool.

According to an eighth aspect of the present invention, in the information processing apparatus according to the first aspect, the processor is configured to, in a case where communication from another terminal apparatus is detected within a predetermined period after the connection is established, or in a case where the identification information is transmitted to the another terminal apparatus via the first communication tool while the another terminal apparatus is located closer to the information processing apparatus as compared with the terminal apparatus, perform control to enable connection to the another terminal apparatus via the second communication tool.

According to a ninth aspect of the present invention, in the information processing apparatus according to the first aspect, the processor is configured to change the identification information of the information processing apparatus after the first communication tool transmits the identification information to the terminal apparatus.

According to a tenth aspect of the present invention, in the information processing apparatus according to the ninth aspect, timing of changing the identification information of the information processing apparatus is any one or a combination of the following: a time when the information processing apparatus is activated; a time when the information processing apparatus enters a power saving state; a time when the information processing apparatus recovers from the power saving state; times at predetermined periods, a time when the connection with the terminal apparatus is established; a time when the connection with the terminal apparatus is ended; and a time when a change operation is performed by an operator.

According to an eleventh aspect of the present invention, in the information processing apparatus according to the first aspect, the processor is configured, in a case where the communication from the terminal apparatus is detected while information indicating a FIDO service is included in the detected communication, perform control such that connection to the terminal apparatus that is a transmission source of the detected communication is performed via the second communication tool.

According to a twelfth aspect of the present invention, in the information processing apparatus according to the first aspect, the processor is configured to, in a case where the communication from the terminal apparatus is detected while information indicating a FIDO service is not included in the detected communication, perform control such that connection with the terminal apparatus that is a transmission source of the detected communication is not performed.

A thirteenth aspect of the present invention is an information processing system comprising: an information processing apparatus that includes a memory and a first processor, wherein the memory stores identification information of the information processing apparatus, the first processor is configured to perform control so as to transmit the identification information to a terminal apparatus via a first communication tool that is wireless proximity communication, detect communication from the terminal apparatus, and, in a case where the identification information of the information processing apparatus is included in the detected communication, request connection to the terminal apparatus that is a transmission source of the detected communication via a second communication tool, and establish the connection with the terminal apparatus, the information processing system further comprising: a terminal apparatus that includes a second processor, wherein the second processor is configured to perform control so as to receive the identification information via a third communication tool that is wireless proximity communication, perform communication including the identification information and receive the connection request from the information processing apparatus via a fourth communication tool, and establish the connection with the information processing apparatus.

A fourteenth aspect of the present invention is an information processing program causing a processor of an information processing apparatus that is a computer including the processor and a memory that stores identification information of the information processing apparatus to perform control so as to execute a process, the process including: transmitting the identification information to a terminal apparatus via a first communication tool that is wireless proximity communication, detecting communication from the terminal apparatus and, in a case where the identification information of the information processing apparatus is included in the communication, requesting connection to the terminal apparatus that is a transmission source of the communication via a second communication tool, and establishing the connection with the terminal apparatus.

According to the information processing apparatus of the first aspect, the wireless communication performed between the information processing apparatus and the terminal apparatus other than the terminal apparatus that is closest to the information processing apparatus or the terminal apparatus carried by the user in the vicinity of the information processing apparatus so as to use the information processing apparatus can be reduced.

According to the information processing apparatus of the second aspect, when the identification information of the information processing apparatus is not included in the communication from the terminal apparatus, control can be performed such that the request for the connection with the terminal apparatus is not made.

According to the information processing apparatus of the third aspect, when the communication including the identification information of the information processing apparatus from the other terminal apparatus is detected within the predetermined period after the connection is established, control can be performed such that the request for the connection with the other terminal apparatus is not made.

According to the information processing apparatus of the fourth aspect, when the communication with the terminal apparatus with which the connection has been established becomes disabled, control can be performed to permit the connection to the other terminal apparatus.

According to the information processing apparatus of the fifth aspect, when the terminal apparatus uses the reading function, control can be performed such that the connection with the other terminal apparatus is not performed.

According to the information processing apparatus of the sixth aspect, when the communication including the identification information of the information processing apparatus from the other terminal apparatus is detected within the predetermined period after the connection is established, the connection to the other terminal apparatus can also be performed.

According to the information processing apparatus of the seventh aspect, when the terminal apparatus and the other terminal apparatus use the printing function, the connection to the other terminal apparatus can also be enabled.

According to the information processing apparatus of the eighth aspect, when the communication from the other terminal apparatus is detected within the predetermined period after the connection is established, or when the identification information is transmitted to the other terminal apparatus through using the first communication tool while the other terminal apparatus is located closer to the information processing apparatus as compared with the terminal apparatus, control can be performed to enable the connection to the other terminal apparatus.

According to the information processing apparatus of the ninth aspect, the identification information can be changed after the first communication tool transmits the identification information to the terminal apparatus.

According to the information processing apparatus of the tenth aspect, the timing of changing the identification information of the information processing apparatus can be any one or the combination of the following: the time when the information processing apparatus is activated; the time when the information processing apparatus enters the power saving state; the time when the information processing apparatus recovers from the power saving state; the times at predetermined periods; the time when the connection with the terminal apparatus is established; the time when the connection with the terminal apparatus is ended; and the time when the change operation is performed by the operator.

According to the information processing apparatus of the eleventh aspect, when the information indicating the FIDO service is included in the communication from the terminal apparatus, control can be performed such that the connection to the terminal apparatus is performed.

According to the information processing apparatus of the twelfth aspect, when the information indicating the FIDO service is not included in the communication from the terminal apparatus, control can be performed such that the connection with the terminal apparatus is not performed.

According to the information processing system of the thirteenth aspect, the wireless communication performed between the information processing apparatus and the terminal apparatus other than the terminal apparatus that is closest to the information processing apparatus or the terminal apparatus carried by the user in the vicinity of the information processing apparatus so as to use the information processing apparatus can be reduced.

According to the information processing program of the fourteenth aspect, the wireless communication performed between the information processing apparatus and the terminal apparatus other than the terminal apparatus that is closest to the information processing apparatus or the terminal apparatus carried by the user in the vicinity of the information processing apparatus so as to use the information processing apparatus can be reduced.

### Brief Description of the Drawings

Exemplary embodiments of the present invention will be described in detail based on the following figures, wherein:
Fig. 1A is a conceptual module configuration diagram illustrating a configuration example according to an exemplary embodiment;
Fig. 1B is a conceptual module configuration diagram illustrating a configuration example according to the exemplary embodiment;
Fig. 2 is an explanatory diagram illustrating a system configuration example using the exemplary embodiment;
Fig. 3 is an explanatory diagram illustrating an example in a case where a connection process between an image processing apparatus and a terminal apparatus is performed without using the exemplary embodiment;
Fig. 4 is an explanatory diagram illustrating a specific example of a system configuration using the exemplary embodiment;
Fig. 5 is a flowchart illustrating a process example according to the exemplary embodiment;
Fig. 6 is a flowchart illustrating a process example according to the exemplary embodiment;
Fig. 7 is an explanatory diagram illustrating a process example according to the exemplary embodiment;
Fig. 8 is a flowchart illustrating a process example according to the exemplary embodiment;
Fig. 9 is a flowchart illustrating a process example according to the exemplary embodiment;
Fig. 10 is a flowchart illustrating a process example according to the exemplary embodiment;
Fig. 11 is a flowchart illustrating a process example according to the exemplary embodiment; and
Fig. 12 is a flowchart illustrating a process example according to the exemplary embodiment.

### Detailed Description

Hereinafter, an example of a preferred exemplary embodiment for implementing the present invention will be described with reference to the drawings.

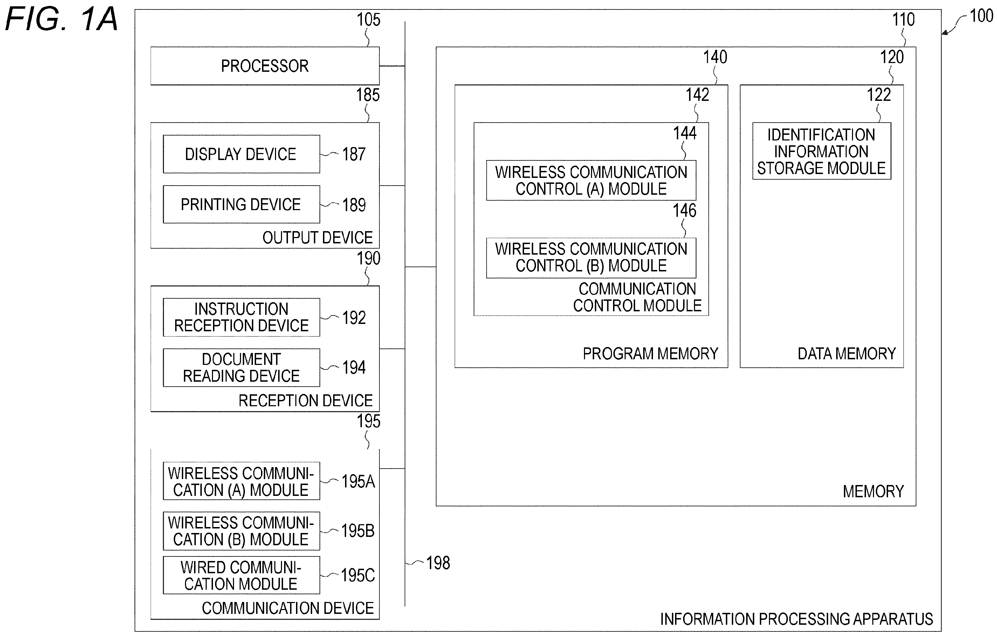

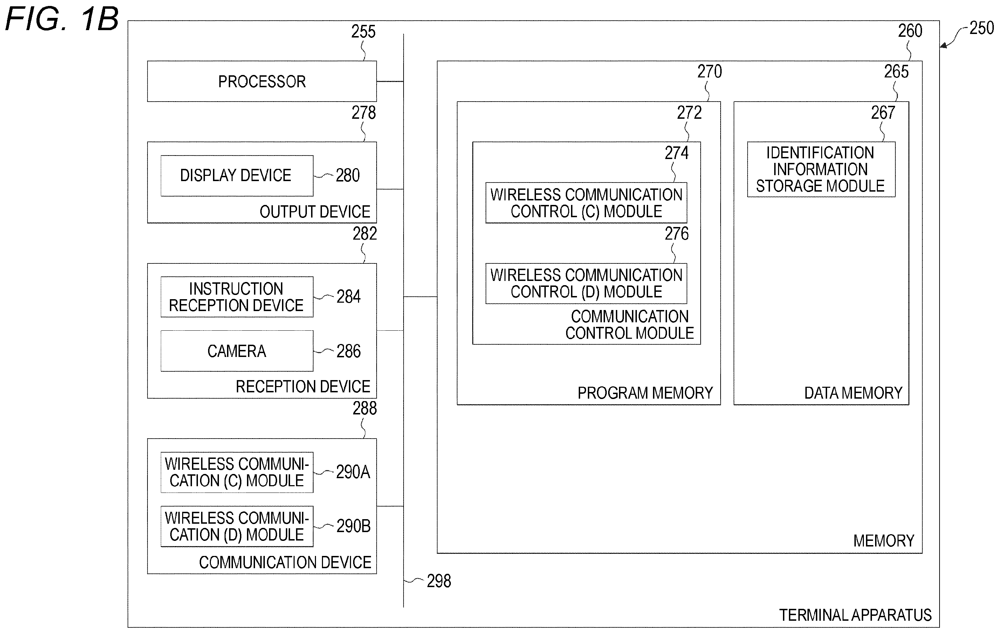

Figs. 1A and 1B illustrate conceptual module configuration diagrams for a configuration example according to an exemplary embodiment.

The term "module" generally refers to a logically separable component such as software (including a computer program as an interpretation of "software"), hardware, or the like. Therefore, the module in the present exemplary embodiment refers to not only a module in a computer program but also a module in a hardware configuration. Therefore, the exemplary embodiment also serves as a description of a computer program (for example, a program for causing a computer to execute each procedure, a program for causing a computer to function as each unit, a program for causing a computer to realize each function), a system, and a method for functioning these modules. However, although terms "store" and "stored" and equivalents thereof are used for the sake of convenience of description, these terms mean that being stored in a storage device or controlled to be stored in a storage device when the exemplary embodiment is a computer program. In implementation, modules may have a one-to-one correspondence with functions, in the implementation, one module may be configured by one program, plural modules may be configured by one program, and conversely, one module may be configured by plural programs. Plural modules may be executed by one computer, or one module may be executed by plural computers in a distributed or parallel environment. One module may include another module. Hereinafter, the term "connection" is used not only for physical connection but also for logical connections (for example, transmission and reception of data, instruction, reference relationship between data, login, or the like). The term "predetermined" means determined prior to target processing, and includes a meaning of being determined according to a situation/state at that time or according to the situation/state up to that time even after the processing according to the present exemplary embodiment starts, as a matter of course, before the processing according to the exemplary embodiment starts. When there are plural "predetermined values", the values may be different from each other, or two or more values ("two or more values" may include, of course, all values) may be the same. In addition, a description of "when A, do B" is used in a meaning of "determine whether it is A, do B when it is determined to be A". However, a case where it is not necessary to determine whether it is A is excluded. In addition, when a thing is listed such as "A, B, and C", "A, B, and C" are only examples unless otherwise specified, and include a case where only one of them is selected (for example, only A).

In addition, the system or the apparatus may be configured such that plural computers, hardware, apparatuses, and the like are connected by a communication tool such as a network ("network" including a one-to-one communication connection), or may be realized by a single computer, hardware, an apparatus, or the like. The terms "apparatus" and "system" are used as terms having the same meaning. Of course, the "system" does not include anything that is nothing more than a social "mechanism" (that is, a social system) that is an artificial agreement.

In addition, target information is read from the storage device for each processing by each module or for each processing when plural processing is performed in the module, and after the processing is performed, a processing result is written to the storage device. Therefore, description of the reading from the storage device before the processing and the writing to the storage device after the processing may be omitted.

An information processing apparatus 100 according to the exemplary embodiment illustrated in the example of Fig. 1A has a function of performing a wireless communication process with a terminal apparatus 250 carried by a user 210. As illustrated in the example of Fig. 1A, the information processing apparatus 100 includes at least a processor 105, a memory 110 and a communication device 195, and is configured by a bus 198 for connecting the processor 105, the memory 110 and the communication device 195 so as to exchange data. In addition, the information processing apparatus 100 may include an output device 185, and a reception device 190. Data is exchanged between the processor 105, the memory 110, the output device 185, the reception device 190, and the communication device 195 via the bus 198.

Note that the block diagram illustrated in the example of Fig. 1A also illustrates an example of a hardware configuration of a computer that implements the information processing apparatus 100 of the exemplary embodiment. The hardware configuration of the computer in which the program according to the exemplary embodiment is executed is a computer as illustrated in Fig. 1A, and is specifically a computer or the like that can serve as a personal computer or a server. As a specific example, a processor 105 is used as a processing unit, and a memory 110 is used as a storage device.

The number of the processor 105 may be one or more. The processor 105 includes, for example, a central processing unit (CPU), a microprocessor, or the like. When plural processors 105 are used, either a tightly coupled multiprocessor or a loosely coupled multiprocessor may be used. For example, plural processor cores may be mounted in one processor 105. Further, it is also possible to use a system in which plural computers are virtually caused to behave as a single computer by connecting the plural computers through a communication path. As a specific example, a loosely coupled multiprocessor may be configured as a cluster system or a computer cluster. The processor 105 executes a program in a program memory 140.

The memory 110 may include, for example, a semiconductor memory in the processor 105 such as a register or a cache memory, may be a main memory that is a main storage device including a random access memory (RAM) and a read only memory (ROM), or the like, an internal storage device such as a hard disk drive (HDD) or a solid state drive (SSD) having a function as a permanent storage device, an external storage device or an auxiliary storage device such as a CD, a DVD, a Blu-ray (registered trademark) Disc, a USB memory, or a memory card, or may include a storage device such as a server connected via a communication line.

The memory 110 mainly includes a data memory 120 for storing data and a program memory 140 for mainly storing programs. Incidentally, the data memory 120 and the program memory 140 may store a program such as an OS for starting the computer, data such as a parameter appropriately changed in execution of the module, or the like, in addition to the information shown and the module program.

The output device 185 includes, for example, a display device 187, a printing device 189, or the like. The display device 187 such as a liquid crystal display, an organic EL display, a three-dimensional display, or a projector displays a processing result by the processor 105, data in the data memory 120, or the like as text, image information, or the like. The printing device 189, such as a printer or a multifunction device, prints the processing result by the processor 105, the data in the data memory 120, or the like. The output device 185 may include a speaker, an actuator for vibrating the device, or the like.

The reception device 190 includes, for example, an instruction reception device 192, a document reading device 194, or the like. The instruction reception device 192 such as a keyboard, a mouse, a microphone, or a camera (including a line-of-sight detection camera or the like) receives data based on an operation (including an operation, a voice, a line of sight, or the like) of a user with respect to the keyboard, the mouse, the microphone, the camera (including the line-of-sight detection camera or the like).

Further, a touch screen may be provided with both functions of the display device 187 and the instruction reception device 192. In this case, with respect to realization of a function of the keyboard, even when there is no physical key, a keyboard (also called a software keyboard, a screen keyboard, or the like) may be drawn on the touch screen by software so as to realize the function of the keyboard.

The display device 187 and the instruction reception device 192 are mainly used as a user interface.

The document reading device 194 such as a scanner or a camera reads or photographs a document and receives the generated image data.

The communication device 195 is a communication line interface such as a network card for connecting to another device via a communication line.

A wireless communication (A) module 195A (an example of a "first communication tool") performs wireless proximity communication with the terminal apparatus 250. A distance (so-called communication distance) from the wireless communication (A) module 195A to a communicable partner is shorter than that of a wireless communication (B) module 195B. For example, NFC (abbreviation of Near Field Communication), RF-ID (abbreviation of Radio Frequency IDentifier), DSRC (abbreviation of Dedicated Short Range Communications), and the like are applicable. In the following examples, NFC is used.

The wireless communication (B) module 195B (an example of a "second communication tool") performs wireless communication with the terminal apparatus 250. For example, Bluetooth, Bluetooth low energy (BLE), and Wi-Fi are applicable. In the following examples, BLE is used.

Depending on a distance between the information processing apparatus 100 and the terminal apparatus 250, there is (1) a case where wireless communication using the wireless communication (A) module 195A and wireless communication using the wireless communication (B) module 195B are both possible, (2) a case where the wireless communication using the wireless communication (B) module 195B is possible while the wireless communication using the wireless communication (A) module 195A is not possible, or (3) a case where the wireless communication using the wireless communication (A) module 195A and the wireless communication using the wireless communication (B) module 195B are both not possible.

When there is a communication tool capable of adjusting intensity of radio waves, the wireless communication (A) module 195A may have lower radio wave intensity than the wireless communication (B) module 195B, and the wireless communication (B) module 195B may have higher radio wave intensity than the wireless communication (A) module 195A. For example, the wireless communication (A) module 195A and the wireless communication (B) module 195B may both be BLE among which the wireless communication (A) module 195A sets radio waves to be weak while the wireless communication (B) module 195B sets radio waves to be strong, or functions of the wireless communication (A) module 195A and the wireless communication (B) module 195B may be provided by changing intensity of radio waves with a single BLE in a time-division manner.

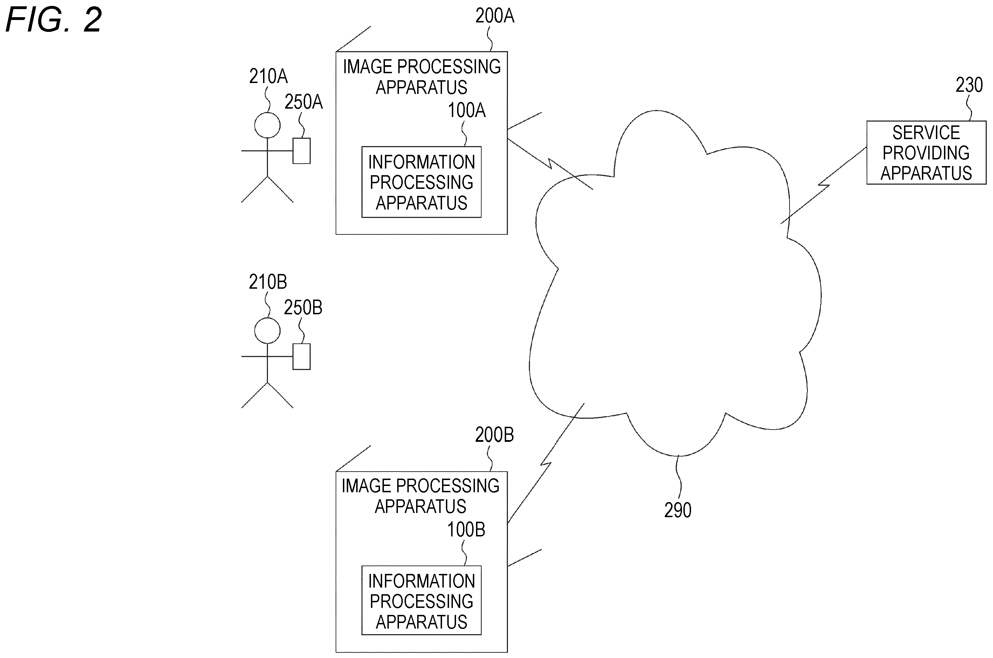

A wired communication module 195C performs wired communication with another apparatus (for example, a service providing apparatus 230 which will be described later with reference to Fig. 2). For example, communication via the Internet is possible.

For a portion based on a computer program in the exemplary embodiment, the computer program as software is read into the program memory 140 of the hardware configuration, and the software and the hardware resources cooperate with each other to realize the exemplary embodiment. That is, the present exemplary embodiment is specifically realized by using hardware resources (including at least the processor 105, the memory 110, and in some cases the output device 185, the reception device 190, and the communication device 195) by the information processing by software, and the law of nature is used as a whole.

Note that the hardware configuration illustrated in Figs. 1A and 1B illustrates one configuration example, and the exemplary embodiment is not limited to the configuration illustrated in Figs. 1A and 1B, but may be any configuration as long as the module described in the exemplary embodiment can be executed. For example, as the processor 105 and a processor 255, a GPU (abbreviation of Graphics Processing Unit, including GPGPU (abbreviation of General-Purpose computing on Graphics Processing Units)) may be used, some of the modules may be executed by dedicated hardware (for example, an integrated circuit for a specific application (as a specific example, an ASIC (abbreviation of Application Specific Integrated Circuit) or the like) or a reconfigurable integrated circuit (as a specific example, an FPGA (abbreviation of Field-Programmable Gate Array) or the like), some modules may be in an external system and connected by a communication line, further, plural systems illustrated in Figs. 1A and 1B may be connected to each other by a communication line so as to cooperate with each other. In particular, in addition to a server and a personal computer, for example, the hardware may be incorporated into an information appliance, a robot, a copier, a fax machine, a scanner, a printer, a multifunction device (an image processing device having two or more functions of a scanner, a printer, a copier, a fax machine, or the like), or the like as the information processing apparatus 100 illustrated in the example of Fig. 1A. The hardware may be incorporated into, for example, a portable information communication device (including a portable phone, a smartphone, a mobile device, a wearable computer, or the like) as the terminal apparatus 250 illustrated in the example of Fig. 1B.

The processor 105 is connected to the memory 110, the output device 185, the reception device 190, and the communication device 195 via the bus 198. The processor 105 executes processing according to a computer program describing an execution sequence of each module, which is a program in the program memory 140. For example, when the wireless communication (B) module 195B receives communication from the terminal apparatus 250, or when an operation of the user is received by the instruction reception device 192, processing by a module corresponding to the operation in the program memory 140 is executed, the processing result is stored in the data memory 120, output to the display device 187, or transmitted to another device by controlling the communication device 195.

The memory 110 includes the data memory 120 and the program memory 140, and is connected to the processor 105, the output device 185, the reception device 190, and the communication device 195 via the bus 198.

The data memory 120 includes an identification information storage module 122.

The identification information storage module 122 stores identification information of the information processing apparatus 100. The identification information is information for uniquely identifying the information processing apparatus 100 in the exemplary embodiment (including a system configuration of the information processing apparatus 100 alone and a system configuration of the information processing apparatus 100 and the terminal apparatus 250), and may be, for example, a media access control (MAC) address, a hash value, a production number (serial number), a name, or the like that is assigned to the information processing apparatus 100.

Note that an identification number in the identification information storage module 122 may be unique information or may be changed as described later.

The program memory 140 stores a communication control module 142.

The communication control module 142 includes a wireless communication control (A) module 144 and a wireless communication control (B) module 146. The communication control module 142 controls wireless communication with the terminal apparatus 250.

The wireless communication control (A) module 144 transmits the identification information in the identification information storage module 122 to the terminal apparatus 250 through using the wireless communication (A) module 195A that is wireless proximity communication. That is, since the terminal apparatus 250 that is capable of receiving the identification information (or the user 210 carrying the terminal apparatus 250) can perform wireless communication with the information processing apparatus 100 by the wireless communication (A) module 195A, the terminal apparatus 250 is in close proximity to the information processing apparatus 100. To be in close proximity as used herein means that at least wireless communication by the wireless communication (B) module 195B can be performed while a distance therefrom to the information processing apparatus 100 is shorter than a distance at which the terminal apparatus 250 cannot perform wireless communication by the wireless communication (A) module 195A. When NFC is used as the wireless proximity communication, a method of setting an NFC peer-to-peer mode function in the wireless communication (A) module 195A and transmitting the identification information in the identification information storage module 122 to the terminal apparatus 250, or a method of setting a card emulation mode function in the wireless communication (A) module 195A and causing the terminal apparatus 250 to read the identification information in the identification information storage module 122 as a tag may be employed.

The wireless communication control (B) module 146 detects communication from the terminal apparatus 250. When the identification information of the information processing apparatus 100 (identification information transmitted by the wireless communication control (A) module 144) is included in the communication, the wireless communication control (B) module 146 requests connection to the terminal apparatus 250 that is a transmission source of the communication via the wireless communication (B) module 195B. In other words, this is a case where the communication from the terminal apparatus 250, which is capable of receiving the identification information of the information processing apparatus 100 through wireless communication by the wireless communication (A) module 195A, is detected. Such a case corresponds to "(1) a case where wireless communication using the wireless communication (A) module 195A and wireless communication using the wireless communication (B) module 195B are both possible" described above.

Here, the "communication" in the "detection of the communication from the terminal apparatus 250" corresponds to, for example, a beacon from the terminal apparatus 250.

Then the wireless communication control (B) module 146 performs control to establish connection with the terminal apparatus 250.

When the wireless communication control (B) module 146 detects the communication from the terminal apparatus 250 while the identification information of the information processing apparatus 100 is not included in the communication, the wireless communication control (B) module 146 may perform control such that the request for the connection with the terminal apparatus 250 is not made. In other words, this is a case where the communication from the terminal apparatus 250, which has not received the identification information of the information processing apparatus 100 through the wireless communication by the wireless communication (A) module 195A, is detected. This corresponds to "(2) a case where the wireless communication using the wireless communication (B) module 195B is possible while the wireless communication using the wireless communication (A) module 195A is not possible".

Within a predetermined period after the connection is established, when (A1) communication including the identification information of the information processing apparatus 100 from another terminal apparatus 250 is detected or (A2) the identification information is transmitted to the other terminal apparatus 250 through using the wireless communication (A) module 195A, the wireless communication control (B) module 146 may perform control such that the request for connection with the other terminal apparatus 250 is not made. That is, the information processing apparatus 100 performs wireless communication only with the terminal apparatus 250 with which the wireless communication connection by the wireless communication (B) module 195B has been established first.

Here, the "other terminal apparatus 250" refers to a terminal apparatus 250 other than the terminal apparatus 250 that has already established the wireless communication connection.

When the wireless communication control (B) module 146 cannot communicate with the terminal apparatus 250 that has already established the connection, the wireless communication control (B) module 146 may perform control to permit the connection to the other terminal apparatus 250 via the wireless communication (B) module 195B.

The information processing apparatus 100 may be an image processing apparatus.

In this case, when the terminal apparatus 250 uses a reading function of the information processing apparatus 100 (a function of the terminal apparatus 250 to acquire an image scanned through using the document reading device 194), the wireless communication control (B) module 146 may perform control such that the connection with the other terminal apparatus 250 is not performed. This is because the reading function is not used by plural persons, while the information processing apparatus 100 should be used by one person. A specific description will be given. In the case where the reading function is used by the terminal apparatus 250 acquiring an image of a document read by the document reading apparatus 194 of the information processing apparatus 100, it may be adopted that a person who operates in front of the information processing apparatus 100 places the document on the document reading device 194 of the information processing apparatus 100 and instructs execution of the reading. In the case of the wireless communication, since a terminal apparatus 250 of a person who is slightly far away can also be connected, if the terminal apparatus 250 that is a transmission destination is mistaken, the image of the read document may be transmitted not to the terminal apparatus 250 of the operating person but to the terminal apparatus 250 of another person. Therefore, it may not be adopted to perform connection with plural terminal apparatuses 250 at the same time.

For example, if information indicating which function of the information processing apparatus 100 is to be used is included in the information transmitted by the communication from the terminal apparatus 250, it can be determined whether the terminal apparatus 250 and the other terminal apparatus 250 use the reading function of the information processing apparatus 100.

Further, within the predetermined period after the connection is established, when the wireless communication control (B) module 146 detects the communication including the identification information of the information processing apparatus 100 from the other terminal apparatus 250 or the identification information is transmitted to the other terminal apparatus 250 through using the wireless communication (A) module 195A, the connection to the other terminal apparatus 250 may also be performed via the wireless communication (B) module 195B. That is, when the communication from the second and subsequent terminal apparatuses 250 is detected in addition to the communication with the terminal apparatus 250 with which the wireless communication connection by the wireless communication (B) module 195B has been established first while the identification information of the information processing apparatus 100 (the identification information transmitted by the wireless communication control (A) module 144) is included in the communication, the information processing apparatus 100 may connect to the second and subsequent terminal apparatuses 250 via the wireless communication (B) module 195B. Thereafter, wireless communication connection may be established.

The information processing apparatus 100 may be an image processing apparatus.

In this case, when the terminal apparatus 250 and the other terminal apparatus 250 use a printing function (a printing function using the printing device 189) of the information processing apparatus 100, the wireless communication control (B) module 146 may enable the connection to the other terminal apparatus 250 via the wireless communication (B) module 195B. Since the printing function only needs to sequentially process received print instructions and thus may be used in a state where plural persons are connected, the information processing device 100 is set to be capable of being used by plural persons. A specific description will be given. In the case where the printing function of the information processing apparatus 100 is used from the terminal apparatus 250, since only a print job is transmitted, even if print jobs are received from plural terminal apparatuses 250 connected at the same time, printing may be performed according to an order of the reception, and thus there is no problem even if the plural of terminal apparatuses 250 are connected at the same time.

For example, if the information indicating which function of the information processing apparatus 100 is to be used is included in the communication from each terminal apparatus 250, it can be determined whether the terminal apparatus 250 and the other terminal apparatus 250 use the printing function of the information processing apparatus 100.

Further, within the predetermined period after the connection is established, when the wireless communication control (B) module 146 detects the communication from the other terminal apparatus 250, or when the identification information is transmitted to the other terminal apparatus 250 through using the wireless communication (A) module 195A while the other terminal apparatus 250 is closer to the information processing apparatus 100 than the terminal apparatus 250 that has already established the connection, the wireless communication control (B) module 146 may perform control to enable the connection to the other terminal apparatus 250 via the wireless communication (B) module 195B. For example, whether the terminal apparatus 250 is close to the information processing apparatus 100 may be determined based on intensity of a radio wave received from the terminal apparatus 250. Specifically, when the intensity of the radio wave received from the terminal apparatus 250 that has already established the connection (terminal apparatus 250A) is higher than the intensity of the radio wave received from the other terminal apparatus 250 (terminal apparatus 250B), it is indicated that the terminal apparatus 250A is closer to the information processing apparatus 100 than the terminal apparatus 250B. Of course, on the contrary, when the intensity of the radio wave received from the terminal apparatus 250B is higher than the intensity of the radio wave received from the terminal apparatus 250A, it is indicated that the terminal apparatus 250B is closer to the information processing apparatus 100 than the terminal apparatus 250A.

When the communication from the terminal apparatus 250 is detected while information indicating a FIDO service is included in the communication, the wireless communication control (B) module 146 may perform control such that connection to the terminal apparatus 250 that is a transmission source of the communication is performed via the wireless communication (B) module 195B. That is, in the case where the identification information of the information processing apparatus 100 and the information indicating the FIDO service are included in the communication from the terminal apparatus 250, control is performed such that the connection to the terminal apparatus 250 that is the transmission source of the communication is performed via the wireless communication (B) module 195B.

When the communication from the terminal apparatus 250 is detected while the information indicating the FIDO service is not included in the communication, the wireless communication control (B) module 146 may perform control such that the connection with the terminal apparatus 250 that is the transmission source of the communication is not performed. That is, even if the identification information of the information processing apparatus 100 is included in the communication from the terminal apparatus 250, if there is no information indicating the FIDO service, control is performed such that the connection with the terminal apparatus 250 that is the transmission source of the communication is not performed.

The wireless communication control (B) module 146 may change the identification information of the information processing apparatus 100 after the wireless communication (A) module 195A transmits the identification information to the terminal apparatus 250. This is to prevent the wireless communication by the wireless communication (B) module 195B from being performed even if the terminal apparatus 250 is far such that the communication by the wireless communication (A) module 195A cannot be performed (that is, even if the terminal apparatus 250 is far from the information processing apparatus 100), for example, after the terminal apparatus 250 performs the wireless communication by the wireless communication (B) module 195B of the information processing apparatus 100. Note that "after the wireless communication (A) module 195A transmits the identification information to the terminal apparatus 250" may also be "after the wireless communication (B) module 195B establishes the wireless communication connection".

Timing of changing the identification information of the information processing apparatus 100 may be any one or a combination of the following: a time when the information processing apparatus 100 is activated; a time when the information processing apparatus 100 enters a power saving state; a time when the information processing apparatus 100 recovers from the power saving state; times at predetermined periods; a time when the connection with the terminal apparatus 250 is established; a time when the connection with the terminal apparatus 250 is ended; and a time when a change operation is performed by an operator

The terminal apparatus 250 according to the exemplary embodiment illustrated in the example of Fig. 1B has a function of performing a wireless communication process with the information processing apparatus 100 that the user 210 intends to use. As illustrated in the example of Fig. 1B, the terminal apparatus 250 includes at least a processor 255, a memory 260, and a communication device 288, and is configured by a bus 298 for connecting the processor 255, the memory 260 and the communication device 288 so as to exchange data. In addition, the terminal apparatus 250 may include an output device 278, and a reception device 282. Data is exchanged between the processor 255, the memory 260, the output device 278, the reception device 282, and the communication device 288 via the bus 298.

Note that the block diagram illustrated in the example of Fig. 1B also illustrates an example of a hardware configuration of a computer that implements the terminal apparatus 250 of the exemplary embodiment. The hardware configuration of the computer in which the program according to the exemplary embodiment is executed is a computer as illustrated in Fig. 1B, and is specifically a computer or the like that can serve as a portable information communication device. As a specific example, the processor 255 is used as a processing unit, and the memory 260 is used as a storage device.

Functions of the processor 255, the memory 260, the output device 278, the reception device 282, the communication device 288, and the bus 298 in the terminal apparatus 250 are equivalent functions correspond to the functions of the processor 105, the memory 110, the output device 185, the reception device 190, the communication device 195, and the bus 198 in the information processing apparatus 100, respectively. Similarly, a data memory 265 corresponds to the data memory 120, a program memory 270 corresponds to the program memory 140, a display device 280 corresponds to the display device 187, an instruction reception device 284 corresponds to the instruction reception device 192, a wireless communication (C) module 290A corresponds to the wireless communication (A) module 195A, and a wireless communication (D) module 290B corresponds to the wireless communication (B) module 195B, all of which have functions equivalent to such corresponding components. A camera 286 captures a scene or the like as a digital image in response to an operation by the user 210 of the instruction reception device 284 that also serves as a shutter. Of course, since the terminal apparatus 250 is a portable information communication device as described above, the terminal apparatus 250 has a size that can be carried by a person.

An identification information storage module 267 stores the identification information of the information processing apparatus 100 received by the wireless communication (C) module 290A.

A wireless communication control (C) module 274 receives the identification information of the information processing apparatus 100 through using the wireless communication (C) module 290A (an example of a third communication tool) that is capable of performing wireless proximity communication. The wireless communication control (C) module 274 mainly performs wireless communication with the wireless communication control (A) module 144 of the information processing apparatus 100. As described above, NFC or the like is applicable.

A wireless communication control (D) module 276 performs communication including the identification information, receives a connection request from the information processing apparatus 100 via the wireless communication (D) module 290B (an example of a fourth communication tool), and performs control to establish connection with the information processing apparatus 100. The wireless communication control (D) module 276 mainly performs wireless communication with the wireless communication control (B) module 146 of the information processing apparatus 100. As described above, BLE or the like is applicable.

Note that the communication device 288 may also be capable of performing communication via a wireless telephone, the Internet of a wireless line, or the like.

Fig. 2 is an explanatory diagram illustrating a system configuration example using the present exemplary embodiment.

The information processing apparatus 100 is incorporated in an image processing apparatus 200. An example in which the information processing apparatus 100 is an image processing apparatus is illustrated.

The user 210 carries the terminal apparatus 250. The terminal apparatus 250 is a portable information communication device that can be carried by the user 210.

An image processing apparatus 200A, an image processing apparatus 200B, and a service providing apparatus 230 are connected to each other via a communication line 290. The communication line 290 may be wireless, wired, or a combination thereof, and may be, for example, the Internet, an intranet, or the like as a communication infrastructure.

The service providing apparatus 230 provides a service to the terminal apparatus 250 (or the user 210) via the image processing apparatus 200. As the service, for example, a document to be printed by the image processing apparatus 200 is stored, or a document to be read by the image processing apparatus 200 is stored. A function of the service providing apparatus 230 may be implemented as a cloud service.

When the image processing apparatus 200 and the terminal apparatus 250 are connected to each other by BLE through wireless communication, the closest image processing apparatus 200 and the terminal apparatus 250 are not necessarily connected to each other. For example, even if an user 210A carrying the terminal apparatus 250A approaches the image processing apparatus 200A so as to use the image processing apparatus 200A, the terminal apparatus 250B carried by a user 210B may be connected to the image processing apparatus 200A while the terminal apparatus 250A and the image processing apparatus 200A are not connected.

Therefore, the image processing apparatus 200A first transmits identification information of the image processing apparatus 200A (the information processing apparatus 100A) by NFC that has a short communication distance. In this case, only the terminal apparatus 250A that is carried by the user 210A near the image processing apparatus 200A receives the identification information. The terminal apparatus 250A and the terminal apparatus 250B perform beacon communication so as to connect to the image processing apparatus 200 (not limited to the image processing apparatus 200A). When the identification information of the image processing apparatus 200A is included in the beacon communication, BLE connection is established. **In** the example of Fig. 2, the BLE connection is established between the image processing apparatus 200A and the terminal apparatus 250A, and is not established between the image processing apparatus 200A and the terminal apparatus 250B. This is because a beacon of the terminal apparatus 250B does not include the identification information of the image processing apparatus 200A, and this is also because the terminal apparatus 250B is located at such a distance that the terminal apparatus 250B cannot perform wireless communication with the image processing apparatus 200A through NFC.

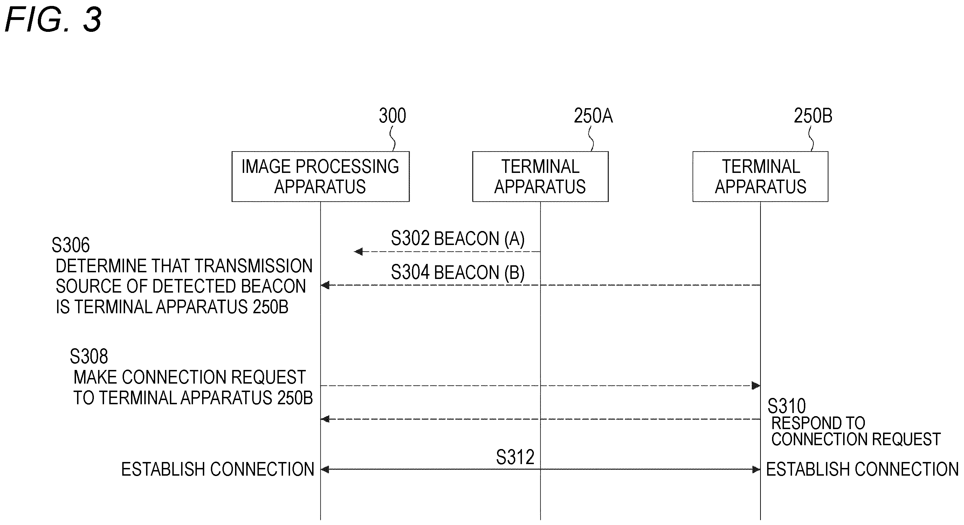

Fig. 3 is an explanatory diagram illustrating an example in a case where a connection process between an image processing apparatus 300 and the terminal apparatus 250 is performed without using the exemplary embodiment. That is, the image processing apparatus 300 illustrates an example of a case where identification information is not transmitted by NFC.

During BLE, a terminal can be specified by receiving a broadcast packet that is called an advertising packet and analyzing contents thereof.

However, assuming that the image processing apparatus 300 is installed in an office, when there are plural terminal apparatuses 250 around the image processing apparatus 300, it is difficult to determine whether the terminal apparatus 250 detected by the image processing apparatus 300 belongs to the user 210A who is actually in front of the image processing apparatus 300. That is, there is a concern about erroneous connection. Accuracy of position detection based on intensity of a received radio wave of Bluetooth is low, and it is difficult to determine the nearest terminal apparatus 250 only based on the intensity of the received radio wave. That is, the terminal apparatus 250B may be detected when the user 210B that is near the image processing apparatus 300 has launched the same application as that of the terminal apparatus 250A.

Description will be given with reference to the flowchart illustrated in the example of Fig. 3. The user 210A carrying the terminal apparatus 250A (the user 210A in front of the image processing apparatus 300) is attempting to use the image processing apparatus 300, and the user 210B carrying the terminal apparatus 250B is a person who happens to pass the vicinity of the image processing apparatus 300. However, both the terminal apparatus 250A and the terminal apparatus 250B launch the application for using the image processing apparatus 300.

According to a CTAP 2 specification used in FIDO 2, a procedure in which an authenticator (terminal apparatus 250) transmits an advertising packet including a UUID of the FIDO, and a browser (image processing apparatus 300) searches for and connects to the terminal apparatus 250 (FIDO UUID) is defined. Processing is performed in accordance with such a CTAP 2 specification of the FIDO 2.

In step S302, a beacon (A) is transmitted from the terminal apparatus 250A. This corresponds to the transmission of the advertising packet described above. However, it is assumed that the beacon (A) cannot be received by the image processing apparatus 300.

In step S304, a beacon (B) is transmitted from the terminal apparatus 250B. This corresponds to the transmission of the advertising packet described above. It is assumed that the beacon (B) is received by the image processing apparatus 300.

In step S306, the image processing apparatus 300 determines that a transmission source of the detected beacon is the terminal apparatus 250B.

In step S308, the image processing apparatus 300 makes a connection request to the terminal apparatus 250B.

In step S310, the terminal apparatus 250B responds to the connection request.

In step S312, connection between the image processing apparatus 300 and the terminal apparatus 250B is established.

As described above, there is a possibility that the advertising packet of the beacon transmitted by the terminal apparatus 250B is acquired. In this case, the image processing apparatus 300 is not always connected to a nearest terminal apparatus 250 (originally, the terminal apparatus 250A).

Therefore, the image processing apparatus 300 should establish a wireless communication connection with the nearest terminal apparatus 250 (the terminal apparatus 250 of the user 210 that stands in front of the image processing apparatus 300 so as to use the image processing apparatus 300). In the following description, a process for reducing wireless communication performed between the image processing apparatus 300 according to the exemplary embodiment and a terminal apparatus other than a terminal apparatus carried by a user in the vicinity of the image processing apparatus 300 will be described.

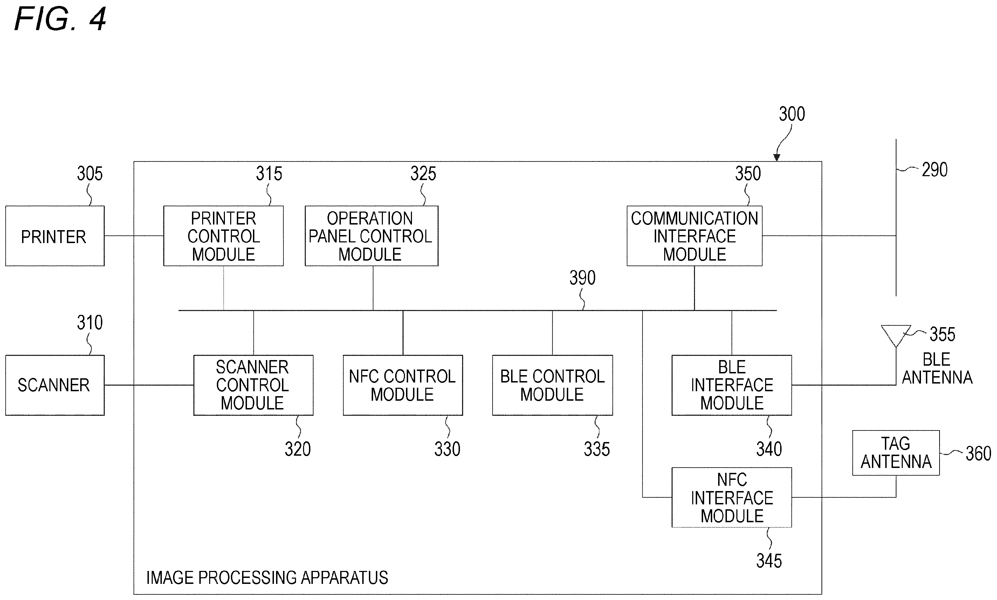

Fig. 4 is an explanatory diagram illustrating a specific example of a system configuration using the exemplary embodiment.

The image processing apparatus 300 includes a printer control module 315, a scanner control module 320, an operation panel control module 325, an NFC control module 330, a BLE control module 335, a BLE interface module 340, an NFC interface module 345, and a communication interface module 350. The image processing apparatus 300 is a specific example of the information processing apparatus 100 (or the image processing apparatus 200) described above.

The printer control module 315, the scanner control module 320, the operation panel control module 325, the NFC control module 330, the BLE control module 335, the BLE interface module 340, the NFC interface module 345, and the communication interface module 350 are connected to each other via a bus 390.

A printer 305 and a scanner 310 are connected to the image processing apparatus 300.

The printer 305 is connected to the printer control module 315. The printer control module 315 controls a printing process performed by the printer 305.

The scanner 310 is connected to the scanner control module 320. The scanner control module 320 controls a reading process performed by the scanner 310.

The operation panel control module 325 displays an operation performed by the user 210 on the image processing apparatus 300, a processing result of the image processing apparatus 300, and the like.

The NFC control module 330 is an example of the above-described wireless communication control (A) module 144.

The BLE control module 335 is an example of the above-described wireless communication control (B) module 146. Specifically, control of BLE communication and CTAP communication of FIDO server authentication is performed.

The communication interface module 350 is connected to the communication line 290. The communication interface module 350 is an example of the above-described wired communication module 195C. Specifically, the communication interface module 350 is connected to the Internet via the communication line 290 (which may further include a FIDO server).

The BLE interface module 340 is connected to a BLE antenna 355 and is controlled by the BLE control module 335. The BLE interface module 340 and the BLE antenna 355 are examples of the above-described wireless communication (A) module 195B.

The NFC interface module 345 is connected to a tag antenna 360 and is controlled by the NFC control module 330. The NFC interface module 345 and the tag antenna 360 are examples of the above-described wireless communication (B) module 195A.

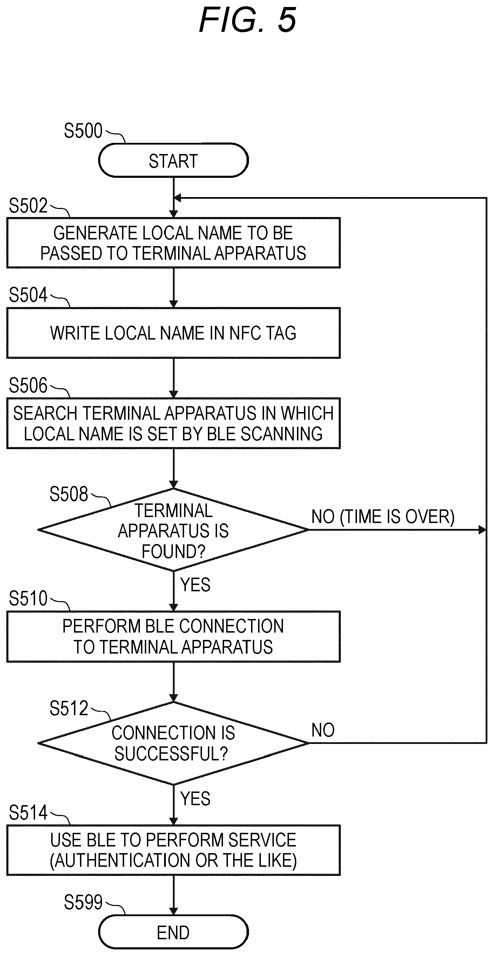

Fig. 5 is a flowchart illustrating a process example according to the exemplary embodiment (the image processing apparatus 300).

In step S502, a local name to be passed to the terminal apparatus 250 is generated. The local name herein is an example of the identification information of the image processing apparatus 300.

In step S504, the local name is written in an NFC tag.

That is, in step S502 and step S504, the image processing apparatus 300 generates the local name to be passed to the terminal apparatus 250, registers the local name in the NFC interface module 345 (NFC-tag) of the image processing apparatus 300, and thus allows the terminal apparatus 250 to read the local name.

The local name may be updated at predetermined timing. For example, the local name may be changed when the terminal apparatus 250 performs NFC reading (that is, when the local name is read by the terminal apparatus 250). That is, the local name is a one-time value.

In addition, the update timing of the local name may be any one of the following, or a combination thereof.
(1) When the image processing apparatus 300 is activated,
(2) when the image processing apparatus 300 enters a power saving state,
(3) when the image processing apparatus 300 recovers from the power saving state,
(4) at predetermined periods,
(5) when Bluetooth connection with the terminal apparatus 250 is established,
(6) when the Bluetooth connection with the terminal apparatus 250 is ended, and
(7) when the user 210 performs a change operation.

Note that the same value may be used without updating the local name. The predetermined period of "(4) at predetermined periods" may be set by the user 210. That is, the user 210 may set the update timing of the local name.

In step S506, the terminal apparatus 250 in which the local name is set by BLE scanning is searched. Specifically, the image processing apparatus 300 starts the BLE scanning of and searches for an advertising packet through using the local name generated in step S502. Here, when the terminal apparatus 250 cannot be found within a predetermined period, the local name may be updated.

In step S508, it is determined whether the terminal apparatus 250 is found. When the terminal apparatus 250 is found, the process proceeds to step S510. When time is out while the terminal apparatus 250 is not found, the process returns to step S502. Specifically, when the image processing apparatus 300 detects an advertising packet that is broadcasted from the terminal apparatus 250 and includes the local name set in step S502, the image processing apparatus 300 determines that the terminal apparatus 250 transmitting the advertising packet is a connection partner.

Further, a distance to the terminal apparatus 250 (intensity of a received radio wave) may be added as a condition of the connection. That is, when two or more terminal apparatuses 250 are found, the terminal apparatus 250 whose received radio wave intensity is high is set as a target of BLE connection.

In step S510, BLE connection to the terminal apparatus 250 is performed. The image processing apparatus 300 requests BLE connection to the terminal apparatus 250 determined as "Yes" in step S508.

In step S512, it is determined whether the connection is successful. When the connection is successful, the process proceeds to step S514. Otherwise, the process returns to step S502.

In step S514, a service (authentication or the like) is performed through using BLE. Specifically, when the BLE connection between the image processing apparatus 300 and the terminal apparatus 250 is established, BLE pairing and service processing are performed.

More specifically, there is (1) a BLE pairing process, (2) an authentication process using a BLE GATT (generic attribute profile) service, that is, a process of reading account information from the terminal apparatus 250, and the like.

If the image processing apparatus 300 does not receive any connection response from the terminal apparatus 250 within a predetermined period, the connection process is suspended.

When a new terminal apparatus 250 is found after the connection, the terminal apparatuses 250 may be switched or simultaneously connected. Such processes will be described later.

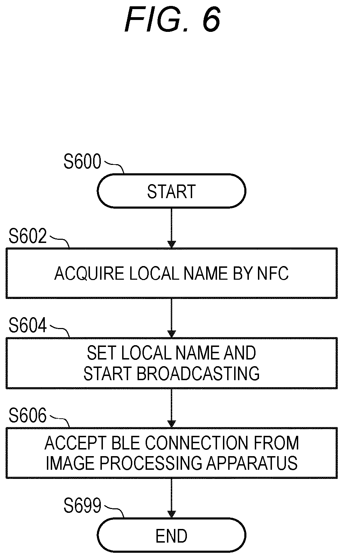

Fig. 6 is a flowchart illustrating a process example according to the exemplary embodiment (the terminal apparatus 250).

In step S602, the local name is acquired by NFC. Specifically, the terminal apparatus 250 reads the local name from the NFC tag of the image processing apparatus 300.

In step S604, a broadcast in which the local name is set is started. Specifically, the local name is embedded in the advertising packet of the terminal apparatus 250, and advertising (broadcast, beacon) is started.

Note that the advertising may also include service type information. Then, when the service type information in the advertising is "FIDO service", the image processing apparatus 300 may check the local name (the processes of step S506 and step S508). When the service type information is not the "FIDO service", the image processing apparatus 300 performs nothing (determines "No" in step S508). Alternatively, a process corresponding to the service type information may be performed.

In step S606, the BLE connection from the image processing apparatus 300 is accepted. Specifically, when the terminal apparatus 250 receives the BLE connection request from the image processing apparatus 300, the terminal apparatus 250 accepts the connection from the image processing apparatus 300 and establishes the BLE connection.

Note that the terminal apparatus 250 may stop the advertising when the BLE connection request from the image processing apparatus 300 cannot be received within a predetermined period.

A combination with a FIDO process will be described in more detail.

As for description of a BLE connection method between devices of the FIDO specification, a sequence is described in "8.3. Bluetooth Smart / Bluetooth Low Energy Technology" and "8.3.6. Protocol Overview" on website https://fidoalliance.org/specs/fido-v2.0-ps-20190130/fido-client-to-authenticator-protocol-v2.0-ps-20190130.html#ble.

In the exemplary embodiment, an "authenticator" corresponds to the terminal apparatus 250, and a "client" corresponds to the image processing apparatus 300.

In the exemplary embodiment, before entering the sequence of FIDO, the image processing apparatus 300 (client) passes the local name to the terminal apparatus 250 (authenticator) by NFC.

In step 1, the terminal apparatus 250 (authenticator) transmits an advertising packet with a beacon. Such information includes information of "FIDO service" that is a packet indicating FIDO, and is transmitted. In the exemplary embodiment, the local name is additionally included and transmitted.

In step 2, the image processing apparatus 300 (client) scans a packet including the information of "FIDO service".

In the subsequent steps, after the packet of the "FIDO service" is detected, BLE authentication and connection of the apparatus are performed.

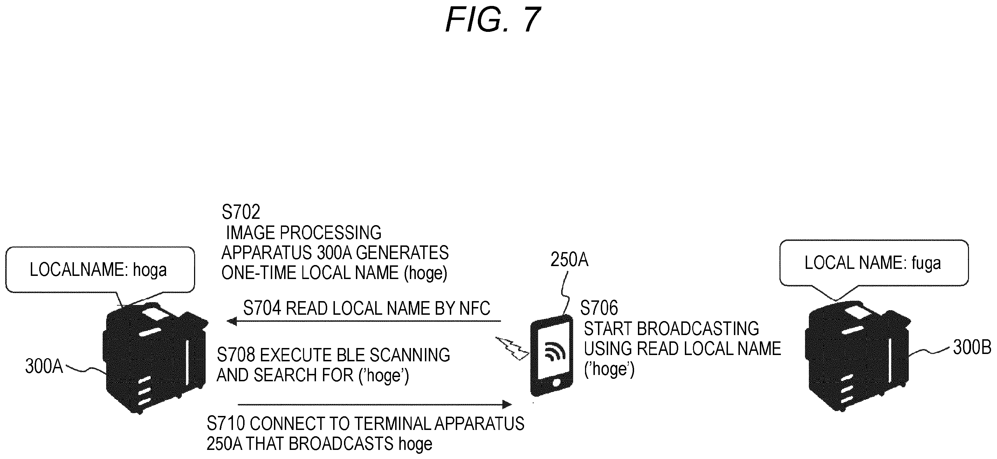

Fig. 7 is an explanatory diagram illustrating a process example according to the exemplary embodiment (the image processing apparatus 300 and the terminal apparatus 250).

In step S702, the image processing apparatus 300A generates a one-time local name (for example, hoge). Note that an image processing apparatus 300B also generates a one-time local name (for example, fuga) that is different from the local name generated by the image processing apparatus 300A.

In step S704, the terminal apparatus 250 touches NFC of the image processing apparatus 300A and reads the local name.

In step S706, the terminal apparatus 250 starts broadcasting using the read local name ('hoge').

In step S708, the image processing apparatus 300A executes BLE scanning and searches for ('hoge').

In step S710, the image processing apparatus 300A is connected to the terminal apparatus 250A that broadcasts hoge.

That is, the image processing apparatus 300A determines "Yes" in step S512 in the flowchart illustrated in the example of Fig. 5, while the image processing apparatus 300B determines "No" in step S512.

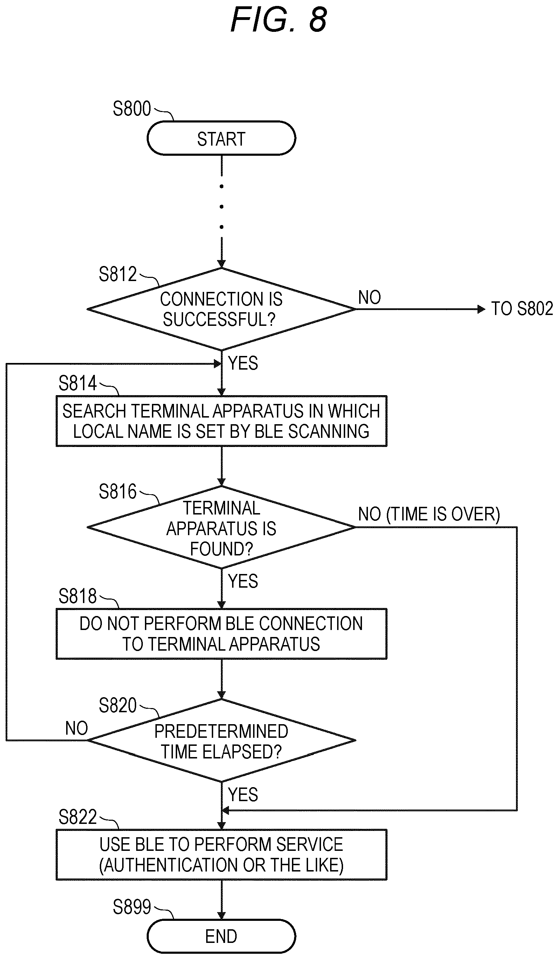

Fig. 8 is a flowchart illustrating a processing example according to the present exemplary embodiment. This flowchart indicates a process in a case where, when communication from the other terminal apparatus 250B is detected within a predetermined period after connection with the terminal apparatus 250A is established, control is performed such that the request for connection with the terminal apparatus 250B is not made. Examples of "when communication from the other terminal apparatus 250B is detected" include a case where the communication from the terminal apparatus 250B is detected immediately after the communication (for example, the beacon) from the terminal apparatus 250A is detected, and a case where NFC tapping is continuously performed from another terminal.

Processes from step S802 to step S812 are the same as the processes from step S502 to step S512 in the flowchart illustrated in the example of Fig. 5.

In step S814, the terminal apparatus 250 in which the local name is set by BLE scanning is searched. This is the same process as step S506.

In step S816, it is determined whether the terminal apparatus 250 is found. When the terminal apparatus 250 is found, the process proceeds to step S818. When time is out while the terminal apparatus 250 is not found, the process proceeds to step S822. This is the same process as step S508.

In step S818, BLE connection with the terminal apparatus 250 found in step S816 is not performed.

In step S820, it is determined whether a predetermined time has elapsed from a time when the connection is successful (when it is determined as "Yes" in step S812). If the predetermined time has elapsed, the process proceeds to step S822. Otherwise, the process returns to step S814.

In step S822, a service (authentication or the like) is performed through using BLE. This is the same process as step S514.

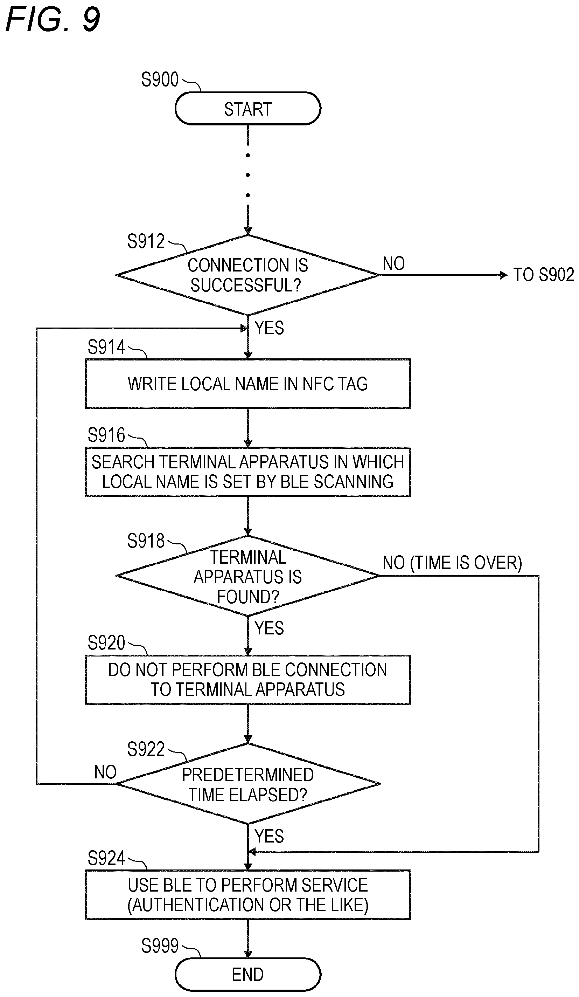

Fig. 9 is a flowchart illustrating a processing example according to the present exemplary embodiment. This flowchart illustrates a process example in a case where, when the local name is transmitted to the other terminal apparatus 250B through using NFC within the predetermined period after the connection with the terminal apparatus 250A is established, control is performed such that the request for connection with the terminal apparatus 250B is not made.

Processes from step S902 to step S912 are the same as the processes from step S502 to step S512 in the flowchart illustrated in the example of Fig. 5.

In step S914, the local name is written in the NFC tag. This is the same process as step S504.

In step S916, the terminal apparatus 250 in which the local name is set by BLE scanning is searched. This is the same process as step S506.

In step S918, it is determined whether the terminal apparatus 250 is found. When the terminal apparatus 250 is found, the process proceeds to step S920. When time is out while the terminal apparatus 250 is not found, the process proceeds to step S924. This is the same process as step S508.

In step S920, the BLE connection with the terminal apparatus 250 is not performed.

In step S922, it is determined whether the predetermined time has elapsed. If the predetermined time has elapsed, the process proceeds to step S924. Otherwise, the process returns to step S914.

In step S924, a service (authentication or the like) is performed through using BLE. This is the same process as step S514.

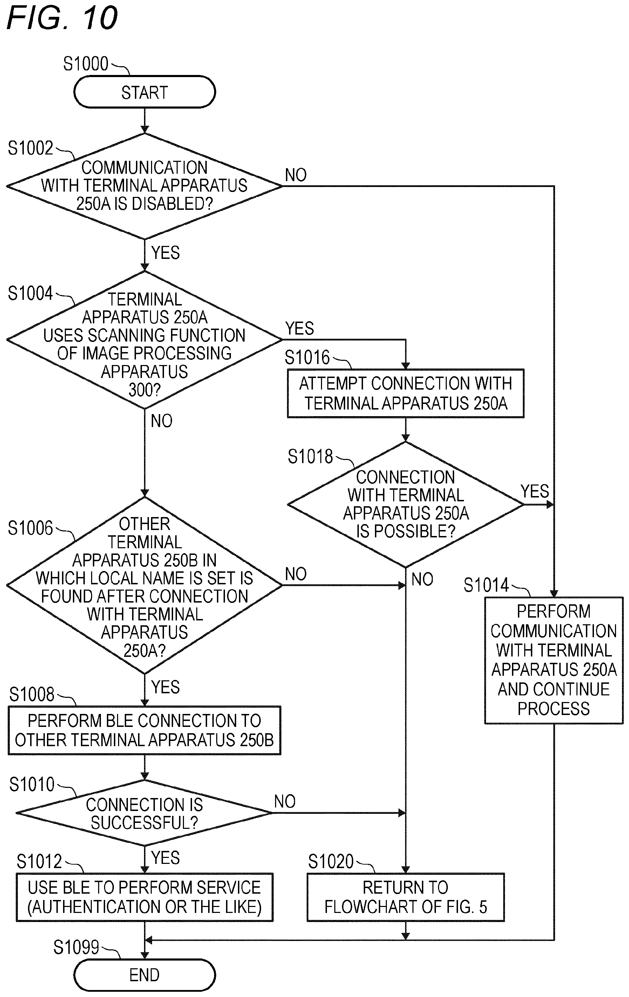

Fig. 10 is a flowchart illustrating a processing example according to the present exemplary embodiment. The processing according to the flowchart illustrated in the example of Fig. 8 or 9 can also cope with a case where the communication with the terminal apparatus 250A with which the connection has been established is already disabled. In this case, a process in a case where control is performed such that the BLE connection request is made to the terminal apparatus 250B that requests the connection is illustrated. Here, the "terminal apparatus 250B that requests the connection" is a terminal apparatus 250 for which the BLE connection has not been performed in the flowchart (steps S818, step S920) illustrated in the example of Fig. 8 or 9.

Note that the flowchart illustrated in the example of Fig. 10 illustrates a process example after the BLE connection with the terminal apparatus 250A is established.

In step S1002, it is determined whether communication with the terminal apparatus 250A is disabled. If disabled, the process proceeds to step S1004. Otherwise, the process proceeds to step S1014.

In step S1004, the terminal apparatus 250A determines whether to use a scanning function of the image processing apparatus 300. If use, the process proceeds to step S1016. Otherwise (for example, use a printing function of the image processing apparatus 300), the process proceeds to step S1006

In step S1006, it is determined whether the other terminal apparatus 250B in which the local name is set is found after the connection with the terminal apparatus 250A. If found, the process proceeds to step S1008. Otherwise, the process proceeds to step S1020

In step S1008, BLE connection to the other terminal apparatus 250B is performed. This is the same process as step S510.

In step S1010, it is determined whether the connection is successful. When the connection is successful, the process proceeds to step S1012. Otherwise, the process proceeds to step S1020. This is the same process as step S512.

In step S1012, a service (authentication or the like) is performed through using BLE. This is the same process as step S514.

In step S1014, communication with the terminal apparatus 250Ais performed, and the process is continued.

In step S1016, the connection with the terminal apparatus 250Ais attempted.

In step S1018, it is determined whether the connection with the terminal apparatus 250A is possible as a result of the process according to step S1016. If the connection is possible, the process proceeds to step S1014. Otherwise, the process proceeds to step S1020.

In step S1020, the process returns to the flowchart (step S502) illustrated in the example of Fig. 5.

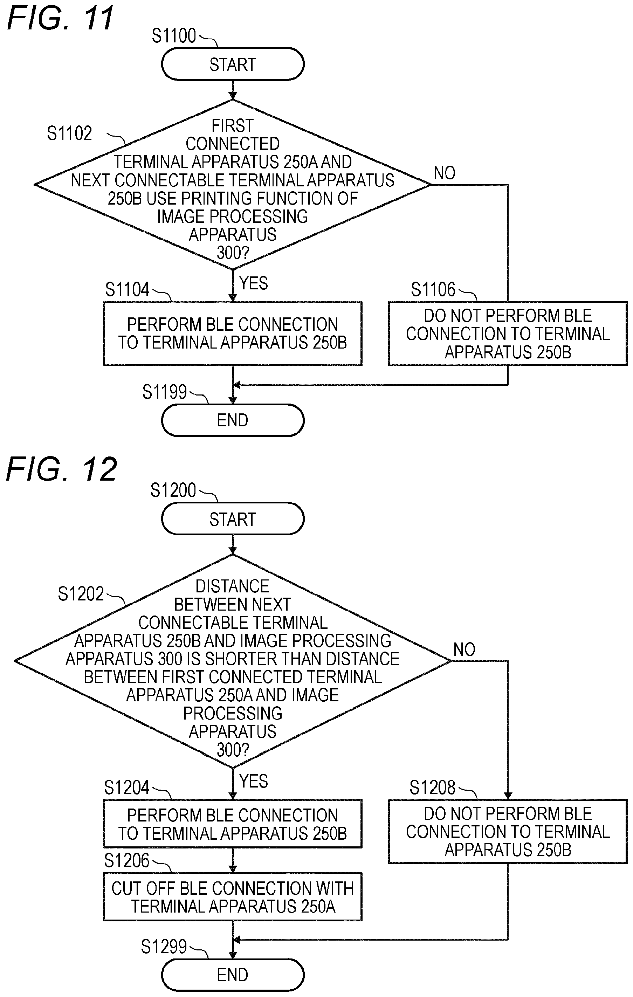

The process of step S818 of the flowchart illustrated in the example of Fig. 8 or the process of step S920 of the flowchart illustrated in the example of Fig. 9 may be replaced with a process according to a flowchart illustrated in an example of Fig. 11.

Fig. 11 is a flowchart illustrating a processing example according to the present exemplary embodiment. This flowchart illustrates a process example in which the BLE connection request is also made to the terminal apparatus 250B when the communication from the terminal apparatus 250B is detected within a predetermined period after the connection is established, or when the identification information is transmitted to the terminal apparatus 250B through using NFC. More specifically, this flowchart illustrates a process example in a case where the BLE connection request is also made to the terminal apparatus 250B when the terminal apparatus 250A and the terminal apparatus 250B use the printing function of the image processing apparatus 300.

In step S1102, the first connected terminal apparatus 250A and the next connectable terminal apparatus 250B determine whether to use the printing function of the image processing apparatus 300. If use, the process proceeds to step S1104. Otherwise, the process proceeds to step S1106.

In step S1104, BLE connection to the terminal apparatus 250B is performed.

In step S1106, the BLE connection with the terminal apparatus 250B is not performed.

Note that the process of step S822 of the flowchart illustrated in the example of Fig. 8 or the process of step S924 of the flowchart illustrated in the example of Fig. 9 may be "a printing process of the terminal apparatus 250A and the terminal apparatus 250B performed through using BLE".

The process of step S818 of the flowchart illustrated in the example of Fig. 8 or the process of step S920 of the flowchart illustrated in the example of Fig. 9 may be replaced with a process according to a flowchart illustrated in an example of Fig. 12.

Fig. 12 is a flowchart illustrating a processing example according to the present exemplary embodiment. This flowchart illustrates a process example in a case where, when the communication from the terminal apparatus 250B is detected within a predetermined period after the connection with the terminal apparatus 250A is established, or in a case where the local name is transmitted to the terminal apparatus 250B through using NFC while the terminal apparatus 250B is closer to the image processing apparatus 300 than the terminal apparatus 250A, control is performed such that the BLE connection request is made to the terminal apparatus 250B.

In step S1202, it is determined whether a distance between the next connectable terminal apparatus 250B and the image processing apparatus 300 is shorter than a distance between the first connected terminal apparatus 250A and the image processing apparatus 300. If shorter, the process proceeds to step S 1204. Otherwise, the process proceeds to step S1208. As described above, the intensity of the radio wave received from the terminal apparatus 250 may be used for "determining whether the distance is short". When intensity of a radio wave from the terminal apparatus 250B is higher than intensity of a radio wave from the terminal apparatus 250A, the process proceeds to step S1204. When the intensity of the radio wave from the terminal apparatus 250A is higher than the intensity of the radio wave from the terminal apparatus 250B, the process proceeds to step S1208.

In step S1204, BLE connection to the terminal apparatus 250B is performed.

In step S 1206, BLE connection with the terminal apparatus 250A is cut off.

In step S1208, the BLE connection with the terminal apparatus 250B is not performed.

If three or more terminal apparatuses 250 are connected or connectable, the process of step S1202 may be set to be "whether the terminal device 250 that is closest to the image processing apparatus 300 is not the terminal device 250A that has already been connected?". Then, the process of step S 1204 may be set to be "perform BLE connection to the closest terminal apparatus 250".

In the exemplary embodiments above, the term "processor" refers to hardware in a broad sense. Examples of the processor include general processors (e.g., CPU: Central Processing Unit), dedicated processors (e.g., GPU: Graphics Processing Unit, ASIC: Application Specific Integrated Circuit, FPGA: Field Programmable Gate Array, and programmable logic device).

In the exemplary embodiments above, the term "processor" is broad enough to encompass one processor or plural processors in collaboration that are located physically apart from each other but may work cooperatively. The order of operations of the processor is not limited to one described in the exemplary embodiments above, and may be changed as appropriate.

The program described above may be provided by being stored in a recording medium, or may be provided by a communication tool. In this case, for example, the above-described program may be regarded as an invention of a "computer-readable recording medium storing a program ".

The "computer-readable recording medium storing a program" refers to a computer-readable recording medium in which a program is recorded, which is used for program installation, execution, program distribution, or the like.

The recording medium includes, for example, a digital versatile disc (DVD) such as a "DVD-R, DVD-RW, DVD-RAM, or the like" that is a standard established by the DVD Forum, "DVD+R, DVD+RW, or the like" that is a standard established by DVD+RW, a compact disk (CD) including read-only memory (CD-ROM), CD recordable (CD-R), CD rewritable (CD-RW), or the like, and a Blu-ray (registered trademark) disc, a magneto-optical disk (MO), a flexible disk (FD), a magnetic tape, a hard disk, a read-only memory (ROM), an electrically erasable programmable read-only memory (EEPROM (registered trademark)), a flash memory, a random access memory (RAM), a secure digital (SD) memory card, or the like.

The whole or a part of the program may be recorded in the recording medium and stored, distributed, or the like. In addition, the program may be transmitted by communication, for example, by using a transmission medium such as a wired network or a wireless communication network used for a local area network (LAN), a metropolitan area network (MAN), a wide area network (WAN), the Internet, an intranet, extranet, or the like, or a combination thereof, or may be carried on a carrier wave.

Further, the program may be a part or the whole of another program, or may be recorded on a recording medium together with a separate program. In addition, the program may be divided and recorded on plural recording media. In addition, the program may be recorded in any mode as long as the program can be restored by compression, encryption, or the like.

The invention is set out in the appended set of claims.

### [Explanations of Reference Numerals]

- 100: Information Processing Apparatus
- 105: Processor
- 110: Memory
- 120: Memory
- 122: Identification Information Storage Module
- 140: Program Memory
- 142: Communication Control Module
- 144: Wireless Communication Control (A) Module
- 146: Wireless Communication Control (B) Module
- 148: Module
- 185: Output Device
- 187: Display Device
- 189: Printing Device
- 190: Reception Device
- 192: Instruction Reception Device
- 194: Document Reading Device
- 195: Communication Device
- 195A: Wireless Communication (A) Module
- 195B: Wireless Communication (B) Module
- 195C: Wired Communication Module
- 198: Bus
- 200: Image Processing Apparatus
- 210: User
- 230: Service Providing Apparatus
- 250: Terminal Apparatus
- 290: Communication Line
- 300: Image Processing Apparatus
- 305: Printer
- 310: Scanner
- 315: Printer Control Module
- 320: Scanner Control Module
- 325: Operation Panel Control Module
- 330: NFC Control Module
- 335: BLE Control Module
- 340: BLE Interface Module
- 345: NFC Interface Module
- 350: Communication Interface Module
- 355: BLE Antenna
- 360: Tag Antenna
- 390: Bus

## Claims

1. An information processing apparatus (100) comprising:
a memory (110); and
a processor (105), wherein
the memory (110) stores identification information of the information processing apparatus (100), and
the processor (105) is configured to perform control so as to transmit the identification information to a terminal apparatus (250) via a first
communication module (195A) that is wireless proximity communication,
detect communication from the terminal apparatus (250), check the identification
information included in the detected communication only in a case where the
detected communication further includes information indicating a Fast Identity Online, FIDO service, and, in
a case where the identification information of the information processing apparatus (100) is included in the detected communication, request connection to the terminal apparatus (250) that is a transmission source of the detected communication via a second communication module (195B), and
establish the connection with the terminal apparatus.

2. The information processing apparatus (100) according to claim 1, wherein the processor (105) is configured to
detect the communication from the terminal apparatus (250), and, in a case where the identification information of the information processing apparatus (100) is not included in the detected communication, performs control such that the request for the connection with the terminal apparatus (250) is not made.

3. The information processing apparatus (100) according to claim 1, wherein the processor (105) is configured to
in a case where communication including the identification information of the information processing apparatus (100) from another terminal apparatus (250) is detected within a predetermined period after the connection is established, perform control such that a request for connection with the another terminal apparatus (250) is not made.

4. The information processing apparatus (100) according to claim 3, wherein the processor (105) is configured to
in a case where communication with the terminal apparatus (250) with which the connection has been established becomes disabled, perform control to permit the connection to the another terminal apparatus (250) via the second communication module (195B).

5. The information processing apparatus (100) according to claim 3, wherein the information processing apparatus (100) is an image processing apparatus, and
the processor (105) is configured to
in a case where the terminal apparatus (250) uses a reading function of the information processing apparatus (100), perform control such that the connection with the another terminal apparatus (250) is not performed.

6. The information processing apparatus (100) according to claim 1, wherein the processor (105) is configured to
in a case where communication including the identification information of the information processing apparatus (100) from another terminal apparatus (250) is detected within a predetermined period after the connection is established, perform connection also to the another terminal apparatus (250) via the second communication module (195B).

7. The information processing apparatus (100) according to claim 6, wherein the information processing apparatus (100) is an image processing apparatus, and
the processor (105) is configured to
in a case where the terminal apparatus (250) and the another terminal apparatus (250) use a printing function of the information processing apparatus (100), enable connection also to the another terminal apparatus (250) via the second communication module (195B).

8. The information processing apparatus (100) according to claim 1, wherein the processor (100) is configured to
in a case where communication from another terminal apparatus (250) is detected within a predetermined period after the connection is established, or in a case where the identification information is transmitted to the another terminal apparatus (250) via the first communication module (195A) while the
another terminal apparatus (250) is located closer to the information processing apparatus (100) as compared with the terminal apparatus (250), perform control to enable connection to the another terminal apparatus (250) via the second communication module (195B).

9. The information processing apparatus (100) according to claim 1, wherein the processor (105) is configured to
change the identification information of the information processing apparatus (100) after the first communication module (195A) transmits the identification information to the terminal apparatus (250).

10. The information processing apparatus (100) according to claim 9, wherein timing of changing the identification information of the information processing apparatus (100) is any one or a combination of the following:
a time when the information processing apparatus (100) is activated; a time when the information processing apparatus (100) enters a power saving state;
a time when the information processing apparatus (100) recovers from the power saving state; times at predetermined periods, a time when the connection with the terminal apparatus (250) is established; a time when the connection with the terminal apparatus (250) is ended; and a time when a change operation is performed by an operator.

11. The information processing apparatus (100) according to claim 1, wherein the processor (105) is configured to
in a case where the communication from the terminal apparatus (250) is detected while the information indicating the FIDO service is not included in the detected communication, perform control such that connection with the terminal apparatus (250) that is a transmission source of the detected communication is not performed.

12. An information processing system comprising:
an information processing apparatus (100) that includes a memory (110) and a first processor (105), wherein
the memory (110) stores identification information of the information processing apparatus (100),
the first processor (105) is configured to perform control so as to transmit the identification information to a terminal apparatus (250) via a first communication module (195A) that is wireless proximity communication,
detect communication from the terminal apparatus (250), check the identification
information included in the detected communication only in a case where the
detected communication further includes information indicating a Fast Identity Online, FIDO service, and, in a case where the identification information of the information processing apparatus (100) is included in the detected communication, request connection to the terminal apparatus (250) that is a transmission source of the detected communication via a second communication module (195B), and
establish the connection with the terminal apparatus (250),
the information processing system further comprising:
a terminal apparatus (250) that includes a second processor (255), wherein
the second processor (255) is configured to perform control so as to receive the identification information via a third communication module (290A) that is wireless proximity communication, perform communication including the identification information and receive the connection request from the information processing apparatus (100) via a fourth communication module (290B), and
establish the connection with the information processing apparatus, only when the communication further includes the information indicating the FIDO service.

13. A computer program comprising instructions which, when the program is executed by a computer, cause the computer to perform control of an information processing apparatus (100) including a processor (105) and a memory (110) that stores identification information of the information processing apparatus (100), wherein the processor (105) is configured to perform control to execute a process, the process comprising transmitting the identification information to a terminal apparatus (250) via a first communication tool (195A) that is wireless proximity communication, detecting communication from the terminal apparatus (250), checking the identification information included in the detected communication only in a case where the detected communication further includes information indicating a Fast Identity Online, FIDO service, and, in a case where the identification information of the information processing apparatus (100) is included in the communication, requesting connection to the terminal apparatus (250) that is a transmission source of the communication via a second communication tool (195B), and establishing the connection with the terminal apparatus.

## Patentansprüche

1. Informationsverarbeitungsvorrichtung (100), umfassend:
einen Speicher (110); und
einen Prozessor (105), wobei
der Speicher (110) Identifikationsinformationen der
Informationsverarbeitungsvorrichtung (100) speichert, und
der Prozessor (105) so konfiguriert ist, dass er Steuerung so durchführt, dass er die Identifikationsinformationen an eine Terminalvorrichtung (250) via ein erstes Kommunikationsmodul (195A), das drahtlose Nahkommunikation ist, überträgt,
Kommunikation von der Terminalvorrichtung (250) detektiert, die Identifikationsinformationen, die in der detektierten Kommunikation enthalten sind, nur in einem Fall, in dem die detektierte Kommunikation ferner Informationen, die einen Fast Identity Online, FIDO-Dienst, angeben, enthält, überprüft, und in einem Fall, in dem die Identifikationsinformationen der
Informationsverarbeitungsvorrichtung (100) in der detektierten Kommunikation enthalten sind, Verbindung zu der Terminalvorrichtung (250), die eine Übertragungsquelle der detektierten Kommunikation ist, via ein zweites Kommunikationsmodul (195B) anfordert, und
die Verbindung mit der Terminalvorrichtung herstellt.

2. Informationsverarbeitungsvorrichtung (100) nach Anspruch 1, wobei der Prozessor (105) so konfiguriert ist, dass er
die Kommunikation von der Terminalvorrichtung (250) detektiert, und in einem Fall, in dem die Identifikationsinformationen der Informationsverarbeitungsvorrichtung (100) nicht in der detektierten Kommunikation enthalten sind, Steuerung so durchführt, dass die Anforderung nach der Verbindung mit der Terminalvorrichtung (250) nicht erfolgt.

3. Informationsverarbeitungsvorrichtung (100) nach Anspruch 1, wobei der Prozessor (105) so konfiguriert ist, dass er
in einem Fall, in dem Kommunikation, die die Identifikationsinformationen der Informationsverarbeitungsvorrichtung (100) enthält, von einer anderen Terminalvorrichtung (250) innerhalb eines vorbestimmten Zeitraums, nachdem die Verbindung hergestellt wurde, detektiert wird, Steuerung so durchführt, dass eine Anforderung nach Verbindung mit der anderen Terminalvorrichtung (250) nicht erfolgt.

4. Informationsverarbeitungsvorrichtung (100) nach Anspruch 3, wobei der Prozessor (105) so konfiguriert ist, dass er
in einem Fall, in dem Kommunikation mit der Terminalvorrichtung (250), mit der die Verbindung hergestellt wurde, deaktiviert wird, Steuerung zum Erlauben der Verbindung zu der anderen Terminalvorrichtung (250) via das zweite Kommunikationsmodul (195B) durchführt.

5. Informationsverarbeitungsvorrichtung (100) nach Anspruch 3, wobei die Informationsverarbeitungsvorrichtung (100) eine Bildverarbeitungsvorrichtung ist, und der Prozessor (105) so konfiguriert ist, dass er
in einem Fall, in dem die Terminalvorrichtung (250) eine Lesefunktion der Informationsverarbeitungsvorrichtung (100) verwendet, Steuerung so durchführt, dass die Verbindung mit der anderen Terminalvorrichtung (250) nicht durchgeführt wird.

6. Informationsverarbeitungsvorrichtung (100) nach Anspruch 1, wobei der Prozessor (105) so konfiguriert ist, dass er
in einem Fall, in dem Kommunikation, die die Identifikationsinformationen der Informationsverarbeitungsvorrichtung (100) enthält, von einer anderen Terminalvorrichtung (250) innerhalb eines vorbestimmten Zeitraums, nachdem die Verbindung hergestellt wurde, detektiert wird, Verbindung auch zu der anderen Terminalvorrichtung (250) via das zweite Kommunikationsmodul (195B) durchführt.

7. Informationsverarbeitungsvorrichtung (100) nach Anspruch 6, wobei die Informationsverarbeitungsvorrichtung (100) eine Bildverarbeitungsvorrichtung ist, und der Prozessor (105) so konfiguriert ist, dass er
in einem Fall, in dem die Terminalvorrichtung (250) und die andere Terminalvorrichtung (250) eine Druckfunktion der Informationsverarbeitungsvorrichtung (100) verwenden, Verbindung auch zu der anderen Terminalvorrichtung (250) via das zweite Kommunikationsmodul (195B) ermöglicht.

8. Informationsverarbeitungsvorrichtung (100) nach Anspruch 1, wobei der Prozessor (100) so konfiguriert ist, dass er
in einem Fall, in dem Kommunikation von einer anderen Terminalvorrichtung (250) innerhalb eines vorbestimmten Zeitraums, nachdem die Verbindung hergestellt wurde, detektiert wird, oder in einem Fall, in dem die Identifikationsinformationen an die andere Terminalvorrichtung (250) via das erste Kommunikationsmodul (195A) übertragen werden, während sich die andere Terminalvorrichtung (250) im Vergleich zu der Terminalvorrichtung (250) näher an der Informationsverarbeitungsvorrichtung (100) befindet, Steuerung zum Ermöglichen einer Verbindung zu der anderen Terminalvorrichtung (250) via das zweite Kommunikationsmodul (195B) durchführt.

9. Informationsverarbeitungsvorrichtung (100) nach Anspruch 1, wobei der Prozessor (105) so konfiguriert ist, dass er
die Identifikationsinformationen der Informationsverarbeitungsvorrichtung (100) ändert, nachdem das erste Kommunikationsmodul (195A) die Identifikationsinformationen an die Terminalvorrichtung (250) überträgt.

10. Informationsverarbeitungsvorrichtung (100) nach Anspruch 9, wobei der Zeitpunkt des Änderns der Identifikationsinformationen der Informationsverarbeitungsvorrichtung (100) ein beliebiger oder eine Kombination aus dem Folgenden ist:
einen Zeitpunkt, zu dem die Informationsverarbeitungsvorrichtung (100) aktiviert ist;
einen Zeitpunkt, zu dem die Informationsverarbeitungsvorrichtung (100) in einen Stromsparzustand eintritt; einen Zeitpunkt, zu dem die Informationsverarbeitungsvorrichtung (100) sich von dem Stromsparzustand erholt;
Zeitpunkte in vorbestimmten Perioden; einen Zeitpunkt, zu dem die Verbindung mit der Terminalvorrichtung (250) hergestellt wird; einen Zeitpunkt, zu dem die Verbindung mit der Terminalvorrichtung (250) beendet wird; und einen Zeitpunkt, zu dem eine Änderungsbedienung von einem Bediener durchgeführt wird.

11. Informationsverarbeitungsvorrichtung (100) nach Anspruch 1, wobei der Prozessor (105) so konfiguriert ist, dass er
in einem Fall, in dem die Kommunikation von der Terminalvorrichtung (250) detektiert wird, während die Informationen, die den FIDO-Dienst angeben, nicht in der detektierten Kommunikation enthalten sind, Steuerung so durchführt, dass Verbindung mit der Terminalvorrichtung (250), die eine Übertragungsquelle der detektierten Kommunikation ist, nicht durchgeführt wird.

12. Informationsverarbeitungssystem, umfassend:
eine Informationsverarbeitungsvorrichtung (100), die einen Speicher (110) und einen ersten Prozessor (105) enthält, wobei
der Speicher (110) Identifikationsinformationen der Informationsverarbeitungsvorrichtung (100) speichert,
der erste Prozessor (105) so konfiguriert ist, dass er Steuerung so durchführt, dass er
die Identifikationsinformationen an eine Terminalvorrichtung (250) via ein erstes Kommunikationsmodul (195A), das drahtlose Nahkommunikation ist, überträgt, Kommunikation von der Terminalvorrichtung (250) detektiert, die in den detektierten Kommunikationsinformationen enthaltenen Identifikationsinformationen nur in einem Fall, in dem die detektierte Kommunikation ferner Informationen, die einen Fast Identity Online, FIDO-Dienst angeben, enthält, überprüft und in einem Fall, in dem die Identifikationsinformationen der Informationsverarbeitungsvorrichtung (100) in den detektierten Kommunikationsinformationen enthalten sind, Verbindung zu der Terminalvorrichtung (250), die eine Übertragungsquelle der detektierten Kommunikation ist, via ein zweites Kommunikationsmodul (195B) anfordert, und
die Verbindung mit der Terminalvorrichtung (250) herstellt,
wobei das Informationsverarbeitungssystem ferner umfasst:
eine Terminalvorrichtung (250), die einen zweiten Prozessor (255) enthält, wobei der zweite Prozessor (255) so konfiguriert ist, dass er Steuerung so durchführt, dass er die Identifikationsinformationen via ein drittes Kommunikationsmodul (290A), das drahtlose Nahkommunikation ist, empfängt,
Kommunikation, die die Identifikationsinformationen enthält, durchführt und die Verbindungsanforderung von der Informationsverarbeitungsvorrichtung (100) via ein viertes Kommunikationsmodul (290B) empfängt, und
die Verbindung mit der Informationsverarbeitungsvorrichtung nur dann herstellt, wenn die Kommunikation ferner die Informationen, die den FIDO-Dienst angeben, enthält.

13. Computerprogramm, das Anweisungen umfasst, die, wenn das Programm von einem Computer ausgeführt wird, den Computer veranlassen, Steuerung einer Informationsverarbeitungsvorrichtung (100), die einen Prozessor (105) und einen Speicher (110), der Identifikationsinformationen der Informationsverarbeitungsvorrichtung (100) speichert, enthält, durchzuführen, wobei der Prozessor (105) so konfiguriert ist, dass er Steuerung zum Ausführen eines Prozesses durchführt, wobei der Prozess umfasst
Übertragen der Identifikationsinformationen an eine Terminalvorrichtung (250) via ein erstes Kommunikationswerkzeug (195A), das drahtlose Nahkommunikation ist, Detektieren von Kommunikation von der Terminalvorrichtung (250), Überprüfen der in der detektierten Kommunikation enthaltenen Identifikationsinformationen nur in einem Fall, in dem die detektierte Kommunikation ferner Informationen, die einen Fast Identity Online, FIDO-Dienst angeben, enthält, und, in einem Fall, in dem die Identifikationsinformationen der Informationsverarbeitungsvorrichtung (100) in der Kommunikation enthalten sind, Anfordern von Verbindung zu der Terminalvorrichtung (250), die eine Übertragungsquelle der Kommunikation ist, via ein zweites Kommunikationswerkzeug (195B), und
Herstellen der Verbindung mit der Terminalvorrichtung.

## Revendications

1. Appareil de traitement d'informations (100) comprenant :
une mémoire (110) ; et
un processeur (105), dans lequel
la mémoire (110) stocke des informations d'identification de l'appareil de traitement d'informations (100), et
le processeur (105) est configuré pour effectuer un contrôle de manière à transmettre les informations d'identification à un appareil terminal (250) via un premier module de communication (195A) qui est une communication de proximité sans fil, détecter une communication de l'appareil terminal (250), vérifier les informations d'identification incluses dans la communication détectée uniquement dans un cas où la communication détectée inclut en outre des informations indiquant un service Fast Identity Online, FIDO, et, dans un cas où les informations d'identification de l'appareil de traitement d'informations (100) sont incluses dans la communication détectée, demander une connexion à l'appareil terminal (250) qui est une source de transmission de la communication détectée via un deuxième module de communication (195B), et
établir la connexion avec l'appareil terminal.

2. Appareil de traitement d'informations (100) selon la revendication 1, dans lequel le processeur (105) est configuré pour
détecter la communication provenant de l'appareil terminal (250), et, dans un cas où les informations d'identification de l'appareil de traitement d'informations (100) ne sont pas incluses dans la communication détectée, effectue un contrôle de sorte que la demande de connexion avec l'appareil terminal (250) ne soit pas effectuée.

3. Appareil de traitement d'informations (100) selon la revendication 1, dans lequel le processeur (105) est configuré pour
dans un cas où une communication incluant les informations d'identification de l'appareil de traitement d'informations (100) provenant d'un autre appareil terminal (250) est détectée dans une période prédéterminée après l'établissement de la connexion, effectuer un contrôle de sorte qu'une demande de connexion avec l'autre appareil terminal (250) ne soit pas effectuée.

4. Appareil de traitement d'informations (100) selon la revendication 3, dans lequel le processeur (105) est configuré pour
dans un cas où la communication avec l'appareil terminal (250) avec lequel la connexion a été établie devient désactivée, effectuer un contrôle pour permettre la connexion à l'autre appareil terminal (250) via le deuxième module de communication (195B).

5. Appareil de traitement d'informations (100) selon la revendication 3, dans lequel l'appareil de traitement d'informations (100) est un appareil de traitement d'images, et le processeur (105) est configuré pour
dans un cas où l'appareil terminal (250) utilise une fonction de lecture de l'appareil de traitement d'informations (100), effectuer un contrôle de sorte que la connexion avec l'autre appareil terminal (250) ne soit pas effectuée.

6. Appareil de traitement d'informations (100) selon la revendication 1, dans lequel le processeur (105) est configuré pour
dans un cas où une communication incluant les informations d'identification de l'appareil de traitement d'informations (100) provenant d'un autre appareil terminal (250) est détectée dans une période prédéterminée après l'établissement de la connexion, effectuer également une connexion à l'autre appareil terminal (250) via le deuxième module de communication (195B).

7. Appareil de traitement d'informations (100) selon la revendication 6, dans lequel l'appareil de traitement d'informations (100) est un appareil de traitement d'images, et le processeur (105) est configuré pour
dans un cas où l'appareil terminal (250) et l'autre appareil terminal (250) utilisent une fonction d'impression de l'appareil de traitement d'informations (100), permettre également la connexion à l'autre appareil terminal (250) via le deuxième module de communication (195B).

8. Appareil de traitement d'informations (100) selon la revendication 1, dans lequel le processeur (100) est configuré pour
dans un cas où une communication provenant d'un autre appareil terminal (250) est détectée dans une période prédéterminée après l'établissement de la connexion, ou dans un cas où les informations d'identification sont transmises à l'autre appareil terminal (250) via le premier module de communication (195A) tandis que l'autre appareil terminal (250) est situé plus près de l'appareil de traitement d'informations (100) par rapport à l'appareil terminal (250), effectuer un contrôle pour permettre la connexion à l'autre appareil terminal (250) via le deuxième module de communication (195B).

9. Appareil de traitement d'informations (100) selon la revendication 1, dans lequel le processeur (105) est configuré pour
modifier les informations d'identification de l'appareil de traitement d'informations (100) après que le premier module de communication (195A) a transmis les informations d'identification à l'appareil terminal (250).

10. Appareil de traitement d'informations (100) selon la revendication 9, dans lequel le moment de la modification des informations d'identification de l'appareil de traitement d'informations (100) est un quelconque ou une combinaison des éléments suivants :
un moment où l'appareil de traitement d'informations (100) est activé ; un moment où l'appareil de traitement d'informations (100) entre dans un état d'économie d'énergie ;
un moment où l'appareil de traitement d'informations (100) sort de l'état d'économie d'énergie ; des moments à des périodes prédéterminées, un moment où la connexion avec l'appareil terminal (250) est établie ; un moment où la connexion avec l'appareil terminal (250) est terminée ; et un moment où une opération de modification est effectuée par un opérateur.

11. Appareil de traitement d'informations (100) selon la revendication 1, dans lequel le processeur (105) est configuré pour
dans un cas où la communication provenant de l'appareil terminal (250) est détectée alors que les informations indiquant le service FIDO ne sont pas incluses dans la communication détectée, effectuer un contrôle de sorte que la connexion avec l'appareil terminal (250) qui est une source de transmission de la communication détectée ne soit pas effectuée.

12. Système de traitement d'informations comprenant :
un appareil de traitement d'informations (100) qui inclut une mémoire (110) et un premier processeur (105), dans lequel
la mémoire (110) stocke des informations d'identification de l'appareil de traitement d'informations (100),
le premier processeur (105) est configuré pour effectuer un contrôle de manière à transmettre les informations d'identification à un appareil terminal (250) via un premier module de communication (195A) qui est une communication de proximité sans fil, détecter une communication de l'appareil terminal (250), vérifier les informations d'identification incluses dans la communication détectée uniquement dans un cas où la communication détectée inclut en outre des informations indiquant un service Fast Identity Online, FIDO, et, dans un cas où les informations d'identification de l'appareil de traitement d'informations (100) sont incluses dans la communication détectée, demander une connexion à l'appareil terminal (250) qui est une source de transmission de la communication détectée via un deuxième module de communication (195B), et
établir la connexion avec l'appareil terminal (250),
où le système de traitement d'informations comprenant en outre :
un appareil terminal (250) qui inclut un deuxième processeur (255), dans lequel le deuxième processeur (255) est configuré pour effectuer un contrôle de manière à recevoir les informations d'identification via un troisième module de communication (290A) qui est une communication de proximité sans fil,
effectuer une communication incluant les informations d'identification et recevoir la demande de connexion provenant de l'appareil de traitement d'informations (100) via un quatrième module de communication (290B), et
établir la connexion avec l'appareil de traitement d'informations, uniquement lorsque la communication inclut en outre les informations indiquant le service FIDO.

13. Programme informatique comprenant des instructions qui, lorsque le programme est exécuté par un ordinateur, amènent l'ordinateur à effectuer un contrôle d'un appareil de traitement d'informations (100) incluant un processeur (105) et une mémoire (110) qui stocke des informations d'identification de l'appareil de traitement d'informations (100), dans lequel le processeur (105) est configuré pour effectuer un contrôle pour exécuter un processus, le processus comprenant
transmettre les informations d'identification à un appareil terminal (250) via un premier outil de communication (195A) qui est une communication de proximité sans fil, détecter une communication de l'appareil terminal (250), vérifier les informations d'identification incluses dans la communication détectée uniquement dans un cas où la communication détectée inclut en outre des informations indiquant un service Fast Identity Online, FIDO, et, dans un cas où les informations d'identification de l'appareil de traitement d'informations (100) sont incluses dans la communication, demander une connexion à l'appareil terminal (250) qui est une source de transmission de la communication via un deuxième outil de communication (195B), et
établir la connexion avec l'appareil terminal.
